# EUROPEAN PATENT APPLICATION

(11) **EP 4 443 798 A1**
(43) Date of publication of application: **09.10.2024**
(21) Application number: 22914457.1
(22) Date of filing: 21.12.2022
(51) Int. Cl.: H04L 5/00

(54) **PATH LOSS REFERENCE SIGNAL DETERMINING METHOD AND RELATED APPARATUS**

(30) Priority: 30.12.2021 CN 202111669810
(71) Applicant: Huawei Technologies Co., Ltd., Shenzhen, Guangdong 518129 (CN)
(72) Inventor: SHEN, Zhongyi, Shenzhen, Guangdong 518129 (CN); HAN, Jing, Shenzhen, Guangdong 518129 (CN); ZHANG, Li, Shenzhen, Guangdong 518129 (CN); LI, Hong, Shenzhen, Guangdong 518129 (CN)
(74) Representative: Körber, Martin Hans
(86) International application number: PCT/CN2022/140751
(87) International publication number: WO 2023/125203

(57) **Abstract**

This application discloses a pathloss reference signal determining method and a related apparatus, and relates to the field of communication technologies. The method includes: A terminal device receives activation information sent by a network device, where the activation information indicates that a first cell is activated, and the first cell is a cell having a data receiving capability of an uplink channel; and the terminal device determines a target reference signal as a pathloss reference signal, where the target reference signal includes a reference signal used to reflect a downlink pathloss status corresponding to the terminal device, and the pathloss reference signal is used to determine an uplink transmit power of the uplink channel. In this method, a reference signal that can truly reflect a downlink pathloss status corresponding to UE is selected as the pathloss reference signal, so that a downlink pathloss can be accurately calculated, to improve accuracy and efficiency of determining an uplink transmit power of an uplink channel, and eliminate an additional activation delay.

## Description

This application claims priority to Chinese Patent Application No. 2021116698102, filed with China National Intellectual Property Administration on December 30, 2021 and entitled "PATHLOSS REFERENCE SIGNAL DETERMINING METHOD AND RELATED APPARATUS", which is incorporated herein by reference in its entirety.

### TECHNICAL FIELD

This application relates to the field of communication technologies, and in particular, to a pathloss reference signal determining method and a related apparatus.

### BACKGROUND

Carrier aggregation (carrier aggregation, CA) means to aggregate a plurality of carriers to serve user equipment (user equipment, UE). For the UE, each carrier may be considered as a cell. These aggregated cells may be classified into a primary cell (primary cell, PCell) and a secondary cell (secondary cell, SCell). When the UE accesses a network, the UE first accesses a primary cell, and then the primary cell adds several secondary cells for the UE via a radio resource control (radio resource control, RRC) reconfiguration message, and activates these secondary cells, so that these secondary cells have data receiving capabilities of a physical uplink control channel (physical uplink control channel, PUCCH) and other uplink channels. The UE may subsequently access the activated secondary cells for communication to obtain a corresponding service.

Currently, in the foregoing activation process for the secondary cells, a downlink pathloss needs to be calculated based on a pathloss reference signal, so as to determine an uplink transmit power of the UE on an uplink channel, and complete activation for the secondary cells.

However, current accuracy and efficiency of determining the uplink transmit power of the uplink channel are low, and an additional activation delay may be caused.

### SUMMARY

Embodiments of this application provide a pathloss reference signal determining method and a related apparatus. A reference signal that can truly reflect a downlink pathloss status corresponding to UE is selected as a pathloss reference signal, so that a downlink pathloss can be accurately calculated, to improve accuracy and efficiency of determining an uplink transmit power of an uplink channel, and eliminate an additional activation delay.

According to a first aspect, an embodiment of this application provides a pathloss reference signal determining method. The method includes:
a terminal device receives activation information sent by a network device, where the activation information indicates that a first cell is activated, and the first cell is a cell having a data receiving capability of an uplink channel; and
the terminal device determines a target reference signal as a pathloss reference signal, where the target reference signal includes a reference signal used to reflect a downlink pathloss status corresponding to the terminal device, and the pathloss reference signal is used to determine an uplink transmit power of the uplink channel.

In embodiments of this application, a pathloss reference signal determining method is provided. Specifically, the terminal device receives the activation information sent by the network device, to indicate that the first cell is activated, where the first cell is the cell having the data receiving capability of the uplink channel corresponding to the terminal device. In a process of activating the first cell, the terminal device needs to determine the uplink transmit power of the uplink channel corresponding to the terminal device, and a downlink pathloss needs to be calculated for determining the transmit power of the uplink channel. Therefore, the terminal device determines the target reference signal as the pathloss reference signal. The target reference signal includes the reference signal used to reflect the downlink pathloss status corresponding to the terminal device, and the pathloss reference signal may be used to calculate the downlink pathloss, to determine the uplink transmit power of the uplink channel, so as to complete activation of the first cell. In addition, the method for determining the target reference signal as the pathloss reference signal provided in embodiments of this application is not only applicable to the process of activating the first cell. In addition, after the first cell is activated, when the network device has not configured a pathloss reference signal, the method provided in embodiments of this application may still be used to determine the target reference signal as the pathloss reference signal.

Currently, when the terminal device is not configured with a parameter used to perform downlink channel pathloss estimation, the terminal device usually obtains a synchronization signal block (synchronization signal block, SSB) of a master information block (master information block, MIB) as the pathloss reference signal, and calculates the downlink pathloss, to determine the uplink transmit power of the uplink channel. However, in the process of activating the first cell, after receiving the activation information, the terminal device does not necessarily need to read a master information block of the first cell. Therefore, in this case, a specific reference signal selected by the terminal device as the pathloss reference signal is not clear, and the uplink transmit power of the uplink channel determined by the terminal device may be inaccurate, or the terminal device needs to wait for a pathloss reference signal configured by the network device, resulting in an additional activation delay of the first cell.

However, in embodiments of this application, after receiving the activation information sent by the network device, the terminal device determines, as the pathloss reference signal, the reference signal used to reflect the downlink pathloss status corresponding to the terminal device, and calculates the downlink pathloss, to determine the uplink transmit power of the uplink channel, so as to complete activation of the first cell. In embodiments of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the uplink channel, and eliminate the additional activation delay.

In a possible implementation, the determining a target reference signal as a pathloss reference signal includes:
when configuration information corresponding to the first cell does not include a first parameter used to perform downlink channel pathloss estimation, determining the target reference signal as the pathloss reference signal.

In embodiments of this application, a possible implementation of determining the target reference signal as the pathloss reference signal is provided. Specifically, when the configuration information corresponding to the first cell does not include the first parameter, the target reference signal is determined as the pathloss reference signal. The first parameter is a parameter used to perform downlink channel pathloss estimation, and the target reference signal includes the reference signal used to reflect the downlink pathloss status corresponding to the terminal device. In comparison with a current manner in which a synchronization signal block of a master information block is determined as a pathloss reference signal, in embodiments of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the uplink channel, and eliminate the additional activation delay.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

In embodiments of this application, a possible implementation of the target reference signal is provided. Specifically, the target reference signal may include but is not limited to the first reference signal, the second reference signal, the reference signal that has the quasi-colocation relationship with the first reference signal, or the reference signal that has the quasi-colocation relationship with the second reference signal. The first reference signal is the reference signal corresponding to the layer 3 measurement result reported by the terminal device, and the second reference signal is the reference signal corresponding to the layer 1 measurement result reported by the terminal device. Specifically, the layer 3 measurement result may be a layer 3 reference signal received power (Layer 3 reference signal received power, L3-RSRP). The first reference signal may be any one of reference signals corresponding to a plurality of reported layer 3 reference signal received powers, may be a reference signal corresponding to a highest reported layer 3 reference signal received power, may be a reference signal corresponding to a layer 3 reference signal received power reported within a specified time period, or may be a reference signal corresponding to a most recently reported layer 3 reference signal received power. This is not limited herein. Selection may be performed based on a specific application scenario. The layer 1 measurement result may be a layer 1 reference signal received power (Layer 1 reference signal received power, L1-RSRP). Selection of the second reference signal is similar to selection of the first reference signal. This is not limited herein. Selection may be performed based on a specific application scenario. According to embodiments of this application, when the configuration information corresponding to the first cell does not include the parameter used to perform downlink channel pathloss estimation, the terminal device may determine, as the pathloss reference signal, the first reference signal or the reference signal that has the quasi-colocation relationship with the first reference signal, or determine, as the pathloss reference signal, the second reference signal or the reference signal that has the quasi-colocation relationship with the second reference signal, and calculate the downlink pathloss, to determine the uplink transmit power of the uplink channel, so as to complete activation of the first cell. In embodiments of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the uplink channel, and eliminate the additional activation delay.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In embodiments of this application, a possible implementation of the target reference signal is provided. Specifically, it is determined, based on whether the first cell is a known cell or an unknown cell, whether the target reference signal includes the first reference signal or the reference signal that has the quasi-colocation relationship with the first reference signal, or includes the second reference signal or the reference signal that has the quasi-colocation relationship with the second reference signal. When the activation information is received, if the terminal device has previously reported a measurement result of the cell, the cell is considered as a known cell. If the terminal device has not reported a measurement result of the cell, the cell is considered as an unknown cell. When the first cell is a known cell, the target reference signal includes the first reference signal or the reference signal that has the quasi-colocation relationship with the first reference signal. In this case, when the configuration information corresponding to the first cell does not include the parameter used to perform downlink channel pathloss estimation, the terminal device may determine, as the pathloss reference signal, the first reference signal or the reference signal that has the quasi-colocation relationship with the first reference signal. When the first cell is an unknown cell, the target reference signal includes the second reference signal or the reference signal that has the quasi-colocation relationship with the second reference signal. In this case, when the configuration information corresponding to the first cell does not include the parameter used to perform downlink channel pathloss estimation, the terminal device may determine, as the pathloss reference signal, the second reference signal or the reference signal that has the quasi-colocation relationship with the second reference signal. The target reference signal determined according to embodiments of this application can truly reflect the downlink pathloss status corresponding to the terminal device, so that the downlink pathloss can be accurately calculated, to improve accuracy and efficiency of determining the uplink transmit power of the uplink channel, and eliminate the additional activation delay.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In embodiments of this application, a possible implementation of the target reference signal is provided. Specifically, when the configuration information corresponding to the first cell includes the parameter used to determine the spatial relationship of the uplink channel, the target reference signal includes the third reference signal or the reference signal that has the quasi-colocation relationship with the third reference signal. The third reference signal is a reference signal indicated by the spatial relationship of the uplink channel, for example, a synchronization signal block, a channel state information-reference signal, or a sounding reference signal. The terminal device may determine, as the pathloss reference signal, the third reference signal or the reference signal that has the quasi-colocation relationship with the third reference signal, and calculate the downlink pathloss, to determine the uplink transmit power of the uplink channel, so as to complete activation of the first cell. According to embodiments of this application, the terminal device selects, as the pathloss reference signal, the reference signal indicated by the spatial relationship that is of the uplink channel and that is configured by the network device or a reference signal that has a quasi-colocation relationship with the reference signal, so that the downlink pathloss status corresponding to the terminal device can be truly reflected, and the uplink transmit power of the uplink channel can be determined based on a pathloss corresponding to a transmit direction indicated by the spatial relationship of the uplink channel. In this manner, the terminal device and the network device may establish a consistent understanding of the downlink pathloss, to accurately calculate the downlink pathloss, improve accuracy and efficiency of determining the uplink transmit power of the uplink channel, and eliminate the additional activation delay.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In embodiments of this application, a possible implementation of the target reference signal is provided. Specifically, when the configuration information corresponding to the first cell does not include the parameter used to perform downlink channel pathloss estimation, the target reference signal includes the fourth reference signal or the reference signal that has the quasi-colocation relationship with the fourth reference signal. The fourth reference signal is the reference signal indicated by the transmission configuration indicator information of the control resource set of the current downlink bandwidth. The terminal device may determine, as the pathloss reference signal, the fourth reference signal or the reference signal that has the quasi-colocation relationship with the fourth reference signal, and calculate the downlink pathloss, to determine the uplink transmit power of the uplink channel, so as to complete activation of the first cell. According to embodiments of this application, the terminal device selects, as the pathloss reference signal, the reference signal indicated by the transmission configuration indicator information that is of the control resource set and that is configured by the network device or a reference signal that has a quasi-colocation relationship with the reference signal, so that the downlink pathloss status corresponding to the terminal device can be truly reflected, and the terminal device may establish a consistent understanding of the downlink pathloss with the network device, to accurately calculate the downlink pathloss, improve accuracy and efficiency of determining the uplink transmit power of the uplink channel, and eliminate the additional activation delay.

In a possible implementation, the target reference signal includes a fifth reference signal or a reference signal that has a quasi-colocation relationship with the fifth reference signal, and the fifth reference signal is a reference signal used to perform timing synchronization on the first cell.

In embodiments of this application, a possible implementation of the target reference signal is provided. Specifically, when the configuration information corresponding to the first cell does not include the parameter used to perform downlink channel pathloss estimation, the target reference signal includes the fifth reference signal or the reference signal that has the quasi-colocation relationship with the fifth reference signal. In the process of activating the first cell, the terminal device needs to select a synchronization signal to perform precise timing synchronization with the first cell, and the fifth reference signal is the synchronization signal that is selected by the terminal device and that is used to perform precise timing synchronization with the first cell. The terminal device may determine, as the pathloss reference signal, the fifth reference signal or the reference signal that has the quasi-colocation relationship with the fifth reference signal, and calculate the downlink pathloss, to determine the uplink transmit power of the uplink channel, so as to complete activation of the first cell. According to embodiments of this application, the terminal device selects, as the pathloss reference signal, a synchronization signal used to perform precise timing synchronization on the first cell or a reference signal that has a quasi-colocation relationship with the synchronization signal, so that the downlink pathloss status corresponding to the terminal device can be truly reflected, to accurately calculate the downlink pathloss, improve accuracy and efficiency of determining the uplink transmit power of the uplink channel, and eliminate the additional activation delay.

In a possible implementation, the target reference signal includes a sixth reference signal or a reference signal that has a quasi-colocation relationship with the sixth reference signal. The method further includes:
when a timing advance value of the first cell is invalid, receiving downlink channel indication information sent by the network device; and
determining, as the sixth reference signal, a reference signal indicated by the downlink channel indication information.

In embodiments of this application, a possible implementation of the target reference signal is provided. Specifically, when the configuration information corresponding to the first cell does not include the parameter used to perform downlink channel pathloss estimation, and the timing advance value of the first cell is invalid, the target reference signal includes the sixth reference signal or the reference signal that has the quasi-colocation relationship with the sixth reference signal. When the timing advance value of the first cell is invalid, the terminal device receives the downlink channel indication information sent by the network device, triggers random access, and determines the reference signal indicated by the downlink channel indication information as the sixth reference signal. The terminal device may determine, as the pathloss reference signal, the sixth reference signal or the reference signal that has the quasi-colocation relationship with the sixth reference signal, and calculate the downlink pathloss, to determine the uplink transmit power of the uplink channel, so as to complete activation of the first cell. According to embodiments of this application, the terminal device selects, as the pathloss reference signal, the reference signal indicated by the downlink channel indication information used to trigger random access or a reference signal that has a quasi-colocation relationship with the reference signal, so that the downlink pathloss status corresponding to the terminal device can be truly reflected, to accurately calculate the downlink pathloss, improve accuracy and efficiency of determining the uplink transmit power of the uplink channel, and eliminate the additional activation delay.

According to a second aspect, an embodiment of this application provides a pathloss reference signal determining method. The method includes:
a network device sends activation information to a terminal device, where the activation information indicates that a first cell is activated, and the first cell is a cell having a data receiving capability of an uplink channel; and
the network device receives a first message sent by the terminal device, where an uplink transmit power of the first message is determined based on a pathloss reference signal, the pathloss reference signal is determined based on a target reference signal, and the target reference signal includes a reference signal used to reflect a downlink pathloss status corresponding to the terminal device.

In embodiments of this application, a pathloss reference signal determining method is provided. Specifically, the network device sends the activation information to the terminal device, to indicate that the first cell is activated, where the first cell is the cell having the data receiving capability of the uplink channel corresponding to the terminal device. After the terminal device accesses the activated first cell, the network device receives the first message sent by the terminal device. Before sending the first message to the network device, the terminal device needs to determine an uplink transmit power of the uplink channel corresponding to the terminal device, namely, the uplink transmit power of the first message, and a downlink pathloss needs to be calculated for determining the transmit power of the uplink channel. Therefore, the uplink transmit power of the first message is determined based on the pathloss reference signal, and the pathloss reference signal may be determined based on the target reference signal. The target reference signal includes the reference signal used to reflect the downlink pathloss status corresponding to the terminal device. The pathloss reference signal may be used to calculate the downlink pathloss, to determine the uplink transmit power of the first message, so that the network device successfully receives the first message. In addition, the method for determining the target reference signal as the pathloss reference signal provided in embodiments of this application is not only applicable to a process of activating the first cell. In addition, after the first cell is activated, when the network device has not configured a pathloss reference signal, the method provided in embodiments of this application may still be used to determine the target reference signal as the pathloss reference signal.

Currently, when the terminal device is not configured with a parameter used to perform downlink channel pathloss estimation, the pathloss reference signal is usually determined based on a synchronization signal block of a master information block, and the downlink pathloss is calculated, to determine the uplink transmit power of the first message. However, in the process of activating the first cell, after receiving the activation information sent by the network device, the terminal device does not necessarily need to read a master information block of the first cell. Therefore, in this case, a specific reference signal used to determine the pathloss reference signal is not clear, and the uplink transmit power of the determined first message may be inaccurate. Consequently, the network device cannot successfully receive the first message. Alternatively, the terminal device needs to wait for the network device to configure the pathloss reference signal for the terminal device, resulting in an additional activation delay of the first cell and an additional receiving delay of the first message.

However, in embodiments of this application, the uplink transmit power of the first message received by the network device is determined based on the pathloss reference signal, and the pathloss reference signal is determined based on the target reference signal. The target reference signal includes the reference signal used to reflect the downlink pathloss status corresponding to the terminal device, so that the network device successfully receives the first message. In embodiments of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the first message, and eliminate the additional activation delay of the first cell and the additional receiving delay of the first message.

In a possible implementation, configuration information corresponding to the first cell does not include a first parameter used to perform downlink channel pathloss estimation, and the pathloss reference signal is determined based on the target reference signal.

In embodiments of this application, a possible implementation in which the pathloss reference signal is determined based on the target reference signal is provided. Specifically, when the configuration information corresponding to the first cell does not include the first parameter, the pathloss reference signal is determined based on the target reference signal. The first parameter is a parameter used to perform downlink channel pathloss estimation, and the target reference signal includes the reference signal used to reflect the downlink pathloss status corresponding to the terminal device. In comparison with a current manner in which a synchronization signal block of a master information block is determined as a pathloss reference signal, in embodiments of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the first message, and eliminate the additional activation delay of the first cell and the additional receiving delay of the first message.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

In embodiments of this application, a possible implementation of the target reference signal is provided. Specifically, the target reference signal may include but is not limited to the first reference signal, the second reference signal, the reference signal that has the quasi-colocation relationship with the first reference signal, or the reference signal that has the quasi-colocation relationship with the second reference signal. The first reference signal is the reference signal corresponding to the layer 3 measurement result reported by the terminal device, and the second reference signal is the reference signal corresponding to the layer 1 measurement result reported by the terminal device. Specifically, the layer 3 measurement result may be a layer 3 reference signal received power. The first reference signal may be any one of reference signals corresponding to a plurality of reported layer 3 reference signal received powers, may be a reference signal corresponding to a highest reported layer 3 reference signal received power, may be a reference signal corresponding to a layer 3 reference signal received power reported within a specified time period, or may be a reference signal corresponding to a most recently reported layer 3 reference signal received power. This is not limited herein. Selection may be performed based on a specific application scenario. The layer 1 measurement result may be a layer 1 reference signal received power. Selection of the second reference signal is similar to selection of the first reference signal. This is not limited herein. Selection may be performed based on a specific application scenario. According to embodiments of this application, when the configuration information corresponding to the first cell does not include the parameter used to perform downlink channel pathloss estimation, the pathloss reference signal may be determined based on the first reference signal or the reference signal that has the quasi-colocation relationship with the first reference signal, or the pathloss reference signal may be determined based on the second reference signal or the reference signal that has the quasi-colocation relationship with the second reference signal, and the downlink pathloss is calculated to determine the uplink transmit power of the first message, so that the network device successfully receives the first message. In embodiments of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the first message, and eliminate the additional activation delay of the first cell and the additional receiving delay of the first message.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In embodiments of this application, a possible implementation of the target reference signal is provided. Specifically, it is determined, based on whether the first cell is a known cell or an unknown cell, whether the target reference signal includes the first reference signal or the reference signal that has the quasi-colocation relationship with the first reference signal, or includes the second reference signal or the reference signal that has the quasi-colocation relationship with the second reference signal. When the activation information is received, if the terminal device has previously reported a measurement result of the cell, the cell is considered as a known cell. If the terminal device has not reported a measurement result of the cell, the cell is considered as an unknown cell. When the first cell is a known cell, the target reference signal includes the first reference signal or the reference signal that has the quasi-colocation relationship with the first reference signal. In this case, when the configuration information corresponding to the first cell does not include the parameter used to perform downlink channel pathloss estimation, the pathloss reference signal may be determined based on the first reference signal or the reference signal that has the quasi-colocation relationship with the first reference signal. When the first cell is an unknown cell, the target reference signal includes the second reference signal or the reference signal that has the quasi-colocation relationship with the second reference signal. In this case, when the configuration information corresponding to the first cell does not include the parameter used to perform downlink channel pathloss estimation, the pathloss reference signal may be determined based on the second reference signal or the reference signal that has the quasi-colocation relationship with the second reference signal. The target reference signal determined according to embodiments of this application can truly reflect the downlink pathloss status corresponding to the terminal device, so that the downlink pathloss can be accurately calculated, to improve accuracy and efficiency of determining the uplink transmit power of the first message, and eliminate the additional activation delay of the first cell and the additional receiving delay of the first message.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In embodiments of this application, a possible implementation of the target reference signal is provided. Specifically, when the configuration information corresponding to the first cell includes the parameter used to determine the spatial relationship of the uplink channel, the target reference signal includes the third reference signal or the reference signal that has the quasi-colocation relationship with the third reference signal. The third reference signal is a reference signal indicated by the spatial relationship of the uplink channel, for example, a synchronization signal block, a channel state information-reference signal, or a sounding reference signal. The pathloss reference signal may be determined based on the third reference signal or the reference signal that has the quasi-colocation relationship with the third reference signal, the downlink pathloss is calculated, and the uplink transmit power of the first message is determined, so that the network device successfully receives the first message. According to embodiments of this application, the pathloss reference signal is determined based on the reference signal indicated by the spatial relationship that is of the uplink channel and that is configured by the network device or a reference signal that has a quasi-colocation relationship with the reference signal, and can truly reflect the downlink pathloss status corresponding to the terminal device. In addition, the uplink transmit power of the first message may be determined based on a pathloss corresponding to a transmit direction indicated by the spatial relationship of the uplink channel. In this manner, the terminal device and the network device can establish a consistent understanding of the downlink pathloss, to accurately calculate the downlink pathloss, improve accuracy and efficiency of determining the uplink transmit power of the first message, and eliminate the additional activation delay of the first cell and the additional receiving delay of the first message.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In embodiments of this application, a possible implementation of the target reference signal is provided. Specifically, when the configuration information corresponding to the first cell does not include the parameter used to perform downlink channel pathloss estimation, the target reference signal includes the fourth reference signal or the reference signal that has the quasi-colocation relationship with the fourth reference signal. The fourth reference signal is the reference signal indicated by the transmission configuration indicator information of the control resource set of the current downlink bandwidth. The pathloss reference signal may be determined based on the fourth reference signal or the reference signal that has the quasi-colocation relationship with the fourth reference signal, the downlink pathloss is calculated, and the uplink transmit power of the first message is determined, so that the network device successfully receives the first message. According to embodiments of this application, the pathloss reference signal is determined based on the reference signal indicated by the transmission configuration indicator information that is of the control resource set and that is configured by the network device or a reference signal that has a quasi-colocation relationship with the reference signal, and can truly reflect the downlink pathloss status corresponding to the terminal device. In addition, the network device and the terminal device may establish a consistent understanding of the downlink pathloss, to accurately calculate the downlink pathloss, improve accuracy and efficiency of determining the uplink transmit power of the first message, and eliminate the additional activation delay of the first cell and the additional receiving delay of the first message.

In a possible implementation, the target reference signal includes a fifth reference signal or a reference signal that has a quasi-colocation relationship with the fifth reference signal, and the fifth reference signal is a reference signal used to perform timing synchronization on the first cell.

In embodiments of this application, a possible implementation of the target reference signal is provided. Specifically, when the configuration information corresponding to the first cell does not include the parameter used to perform downlink channel pathloss estimation, the target reference signal includes the fifth reference signal or the reference signal that has the quasi-colocation relationship with the fifth reference signal. In the process of activating the first cell, the terminal device needs to select a synchronization signal to perform precise timing synchronization with the first cell, and the fifth reference signal is the synchronization signal that is selected by the terminal device and that is used to perform precise timing synchronization with the first cell. The pathloss reference signal may be determined based on the fifth reference signal or the reference signal that has the quasi-colocation relationship with the fifth reference signal, the downlink pathloss is calculated, and the uplink transmit power of the first message is determined, so that the network device successfully receives the first message. According to embodiments of this application, the pathloss reference signal is determined based on the synchronization signal used by the terminal device to perform precise timing synchronization with the first cell or a reference signal that has a quasi-colocation relationship with the synchronization signal, and can truly reflect the downlink pathloss status corresponding to the terminal device, to accurately calculate the downlink pathloss, improve accuracy and efficiency of determining the uplink transmit power of the first message, and eliminate the additional activation delay of the first cell and the additional receiving delay of the first message.

In a possible implementation, the target reference signal includes a sixth reference signal or a reference signal that has a quasi-colocation relationship with the sixth reference signal. The method further includes:
when a timing advance value of the first cell is invalid, sending downlink channel indication information to the terminal device, where the sixth reference signal is determined based on a reference signal indicated by the downlink channel indication information.

In embodiments of this application, a possible implementation of the target reference signal is provided. Specifically, when the configuration information corresponding to the first cell does not include the parameter used to perform downlink channel pathloss estimation, and the timing advance value of the first cell is invalid, the target reference signal includes the sixth reference signal or the reference signal that has the quasi-colocation relationship with the sixth reference signal. When the timing advance value of the first cell is invalid, the network device sends the downlink channel indication information to the terminal device, to trigger random access of the terminal device, and indicate to determine the reference signal indicated by the downlink channel indication information as the sixth reference signal. The pathloss reference signal is determined based on the sixth reference signal or the reference signal that has the quasi-colocation relationship with the sixth reference signal, the downlink pathloss is calculated, and the uplink transmit power of the first message is determined, so that the network device successfully receives the first message. According to embodiments of this application, the pathloss reference signal is determined based on the reference signal indicated by the downlink channel indication information used to trigger random access of the terminal device or a reference signal that has a quasi-colocation relationship with the reference signal, and can truly reflect the downlink pathloss status corresponding to the terminal device, to accurately calculate the downlink pathloss, improve accuracy and efficiency of determining the uplink transmit power of the first message, and eliminate the additional activation delay of the first cell and the additional receiving delay of the first message.

According to a third aspect, an embodiment of this application provides a communication apparatus. The apparatus includes a module or unit configured to perform the method according to either of the first aspect or the second aspect.

In a possible design, the communication apparatus includes:
a transceiver unit, configured to receive activation information sent by a network device, where the activation information indicates that a first cell is activated, and the first cell is a cell having a data receiving capability of an uplink channel; and
a processing unit, configured to determine a target reference signal as a pathloss reference signal, where the target reference signal includes a reference signal used to reflect a downlink pathloss status corresponding to the communication apparatus, and the pathloss reference signal is used to determine an uplink transmit power of the uplink channel.

In a possible implementation, the processing unit is specifically configured to: when configuration information corresponding to the first cell does not include a first parameter used to perform downlink channel pathloss estimation, determine the target reference signal as the pathloss reference signal.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the communication apparatus, and the second reference signal is a reference signal corresponding to a layer 1 measurement result reported by the communication apparatus.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In a possible implementation, the target reference signal includes a fifth reference signal or a reference signal that has a quasi-colocation relationship with the fifth reference signal, and the fifth reference signal is a reference signal used to perform timing synchronization on the first cell.

In a possible implementation, the target reference signal includes a sixth reference signal or a reference signal that has a quasi-colocation relationship with the sixth reference signal.

The transceiver unit is further configured to: when a timing advance value of the first cell is invalid, receive downlink channel indication information sent by the network device.

The processing unit is further configured to determine, as the sixth reference signal, a reference signal indicated by the downlink channel indication information.

For technical effect brought by the third aspect and any possible implementation, refer to descriptions of technical effect corresponding to the first aspect and corresponding implementations.

In another possible design, the communication apparatus includes:
a transceiver unit, configured to send activation information to a terminal device, where the activation information indicates that a first cell is activated, and the first cell is a cell having a data receiving capability of an uplink channel.

The transceiver unit is further configured to receive a first message sent by the terminal device, where an uplink transmit power of the first message is determined based on a pathloss reference signal, the pathloss reference signal is determined based on a target reference signal, and the target reference signal includes a reference signal used to reflect a downlink pathloss status corresponding to the terminal device.

In a possible implementation, configuration information corresponding to the first cell does not include a first parameter used to perform downlink channel pathloss estimation, and the pathloss reference signal is determined based on the target reference signal.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In a possible implementation, the target reference signal includes a fifth reference signal or a reference signal that has a quasi-colocation relationship with the fifth reference signal, and the fifth reference signal is a reference signal used to perform timing synchronization on the first cell.

In a possible implementation, the target reference signal includes a sixth reference signal or a reference signal that has a quasi-colocation relationship with the sixth reference signal.

The transceiver unit is further configured to: when a timing advance value of the first cell is invalid, send downlink channel indication information to the terminal device, where the sixth reference signal is determined based on a reference signal indicated by the downlink channel indication information.

For technical effect brought by the third aspect and any possible implementations, refer to descriptions of the technical effect corresponding to the second aspect and the corresponding implementations.

According to a fourth aspect, an embodiment of this application provides a communication apparatus, including a processor. The processor is coupled to a memory, and may be configured to execute instructions in the memory, to implement the method in either of the first aspect and the second aspect and any possible implementation thereof. Optionally, the communication apparatus further includes a memory. Optionally, the communication apparatus further includes a communication interface, and the processor is coupled to the communication interface.

According to a fifth aspect, an embodiment of this application provides a processor, including an input circuit, an output circuit, and a processing circuit. The processing circuit is configured to receive a signal through the input circuit, and transmit a signal through the output circuit, so that the processor performs the method in either of the first aspect and the second aspect and any possible implementation thereof.

In a specific implementation process, the processor may be one or more chips, the input circuit may be an input pin, the output circuit may be an output pin, and the processing circuit may be a transistor, a gate circuit, a trigger, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, an embodiment of this application provides a communication apparatus, including a processor and a memory. The processor is configured to: read instructions stored in the memory, receive a signal through a receiver, and transmit a signal through a transmitter, to perform the method in either of the first aspect and the second aspect and any possible implementation thereof.

Optionally, there are one or more processors, and there are one or more memories.

Optionally, the memory may be integrated with the processor, or the memory and the processor are separately disposed.

Specifically, data output by the processor may be output to the transmitter, and input data received by the processor may be from the receiver. The transmitter and the receiver may be collectively referred to as a transceiver.

It may be understood that the communication apparatus in the sixth aspect may be one or more chips. The processor in the communication apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a seventh aspect, an embodiment of this application provides a computer-readable storage medium. The computer-readable storage medium is configured to store a computer program (which may also be referred to as code or instructions). When the computer program is run on a computer, the method in either of the first aspect and the second aspect and any possible implementation thereof is implemented.

According to an eighth aspect, an embodiment of this application provides a computer program product. The computer program product includes a computer program (which may also be referred to as code or instructions). When the computer program is run, a computer is enabled to perform the method in either of the first aspect and the second aspect and any possible implementation thereof.

According to a ninth aspect, an embodiment of this application provides a chip. The chip includes a processor. The processor is configured to execute instructions, and when the processor executes the instructions, the chip is enabled to perform the method in either of the first aspect and the second aspect and any possible implementation thereof. Optionally, the chip further includes a communication interface, and the communication interface is configured to receive a signal or send a signal.

According to a tenth aspect, an embodiment of this application provides a communication system, including a terminal device and a network device.

According to an eleventh aspect, a chip system is provided. The chip system includes a processor and an interface circuit. The processor is configured to invoke, from a memory, a computer program (which may also be referred to as code or instructions) stored in the memory and run the computer program, to implement functions related to either of the first aspect and the second aspect and any possible implementation thereof. In a possible design, the chip system further includes a memory, and the memory is configured to store necessary program instructions and data. The chip system may include a chip, or may include a chip and another discrete component.

In addition, in a process of performing the method in either of the first aspect and the second aspect and any possible implementation thereof, a process related to sending information and/or receiving information and the like in the foregoing method may be understood as a process of outputting information by the processor, and/or a process of receiving input information by the processor. When outputting information, the processor may output the information to a transceiver (or a communication interface or a sending module), so that the transceiver transmits the information. After the information is output by the processor, other processing may further need to be performed on the information before the information arrives at the transceiver. Similarly, when the processor receives input information, the transceiver (or the communication interface or the sending module) receives the information, and inputs the information into the processor. Further, after the transceiver receives the information, other processing may need to be performed on the information before the information is input into the processor.

Based on the foregoing principle, for example, the sending information mentioned in the foregoing method may be understood as outputting information by the processor. For another example, the receiving information may be understood as receiving input information by the processor.

Optionally, unless otherwise specified, or if operations such as transmission, sending, and receiving related to the processor do not conflict with actual functions or internal logic of the operations in related descriptions, all the operations may be more generally understood as operations such as output, receiving, and input of the processor.

Optionally, in the process of performing the method in either of the first aspect and the second aspect and any possible implementation thereof, the processor may be a processor specially configured to perform these methods, or may be a processor, for example, a general-purpose processor, that performs these methods by executing computer instructions in the memory. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside an apparatus.

In another possible implementation, the at least one memory is located inside the apparatus.

In another possible implementation, some memories of the at least one memory are located inside the apparatus, and the other memories are located outside the apparatus.

In this application, the processor and the memory may alternatively be integrated into one component. In other words, the processor and the memory may alternatively be integrated together.

In embodiments of this application, a specific reference signal used as a pathloss reference signal is clearly specified. A reference signal that can truly reflect a downlink pathloss status corresponding to a terminal device is selected as the pathloss reference signal, so that a downlink pathloss can be accurately calculated, to improve accuracy and efficiency of determining an uplink transmit power of an uplink channel, and eliminate an additional activation delay.

### BRIEF DESCRIPTION OF DRAWINGS

To describe the technical solutions in embodiments of this application more clearly, the following briefly describes the accompanying drawings for describing embodiments of this application. It is clear that the accompanying drawings in the following descriptions show merely some embodiments of this application, and a person of ordinary skill in the art may derive other drawings from these accompanying drawings without creative efforts.
FIG. 1 is a diagram of an architecture of a communication system according to an embodiment of this application;
FIG. 2 is a diagram of an architecture of another communication system according to an embodiment of this application;
FIG. 3 is a schematic flowchart of a pathloss reference signal determining method according to an embodiment of this application;
FIG. 4 is a schematic flowchart of a pathloss reference signal determining method according to an embodiment of this application;
FIG. 5 is a diagram of a structure of a communication apparatus according to an embodiment of this application;
FIG. 6 is a diagram of a structure of a communication apparatus according to an embodiment of this application; and
FIG. 7 is a diagram of a structure of a chip according to an embodiment of this application.

### DESCRIPTION OF EMBODIMENTS

To make the objectives, the technical solutions, and the advantages of this application clearer, the following describes embodiments of this application with reference to the accompanying drawings in embodiments of this application.

As described in the background, currently, technical problems of how to improve accuracy and efficiency of determining an uplink transmit power of an uplink channel and eliminate an additional activation delay need to be studied. This application provides a pathloss reference signal determining method and a related apparatus, and relates to the field of communication technologies. A specific reference signal used as a pathloss reference signal is clearly specified. A reference signal that can truly reflect a downlink pathloss status corresponding to a terminal device is selected as the pathloss reference signal, so that a downlink pathloss can be accurately calculated, to improve accuracy and efficiency of determining an uplink transmit power of an uplink channel, and eliminate an additional activation delay.

To describe the solutions of this application more clearly, the following first describes some knowledge related to the pathloss reference signal determining method.

The technical solutions provided in embodiments of this application may be applied to various communication systems, for example, a satellite communication system and a system in which satellite communication and a cellular network are converged. A cellular network system may include but is not limited to: a 5th generation (5th generation, 5G) system, a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, an advanced long term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunications system (Universal Mobile Telecommunications System, UMTS), a worldwide interoperability for microwave access (Worldwide Interoperability for Microwave Access, WiMAX) communication system, a wireless local area network (Wireless Local Area Network, WLAN), wireless fidelity (Wireless Fidelity, Wi-Fi), a next generation communication system, or another communication system. Generally, a conventional communication system supports a limited quantity of connections and is easy to implement. However, with development of communication technologies, a mobile communication system not only supports conventional communication, but also supports other new systems such as device to device (Device to Device, D2D) communication, machine to machine (Machine to Machine, M2M) communication, machine type communication (Machine Type Communication, MTC), vehicle to vehicle (Vehicle to Vehicle, V2V) communication, and another future evolved communication system. Embodiments of this application may also be applied to these communication systems. The satellite communication system may include various non-terrestrial network systems such as a network that performs radio frequency transmission, for example, a satellite or an unmanned aircraft system (unmanned aircraft system, UAS) platform. This is not enumerated one by one herein.

The following describes embodiments of this application with reference to the accompanying drawings in embodiments of this application.

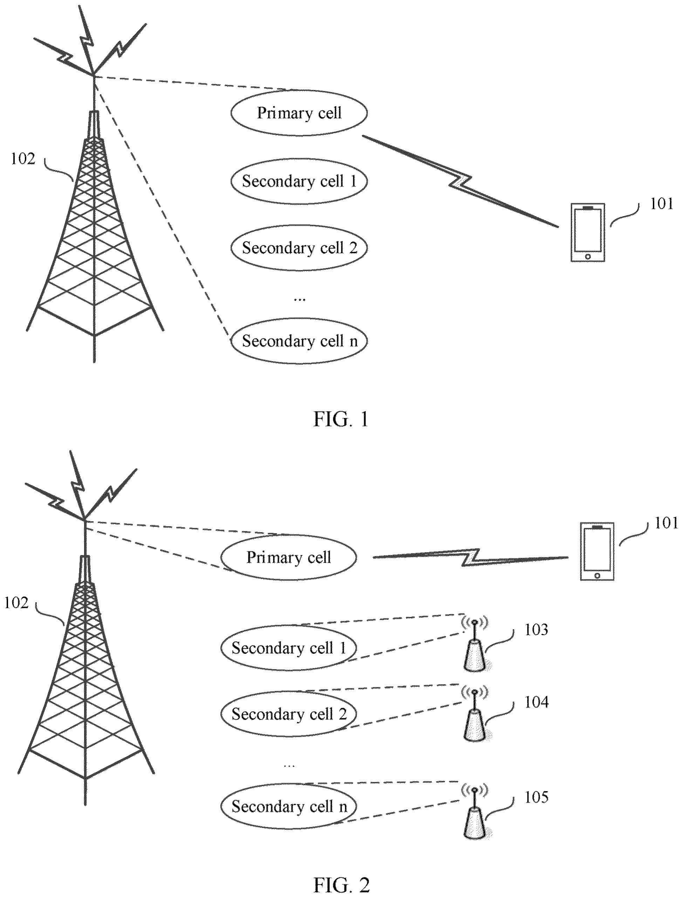

For example, for a communication system 100 to which an embodiment of this application is applied, refer to FIG. 1. FIG. 1 is a diagram of an architecture of a communication system according to an embodiment of this application.

As shown in FIG. 1, the communication system 100 mainly includes two parts: an access network and user equipment (user equipment, UE) 101. The access network is used to implement a function related to radio access, and mainly includes an access network (access network, AN) device 102. The access network device includes a radio access network (radio access network, RAN) device and another device (for example, Wi-Fi) for access through an air interface. Interfaces between network elements are shown in FIG. 1. It should be understood that the network elements may alternatively communicate with each other through a service-oriented interface.

The UE may also be referred to as a terminal device. The terminal device may communicate with one or more core networks (core networks, CNs) through the AN device. The terminal device in embodiments of this application communicates with an apparatus that is of another terminal device and that is disposed to receive/send a communication signal and/or an Internet of Things (Internet of Things, IoT) device via, including but not limited to, a wired line connection, for example, a public switched telephone network (Public Switched Telephone Network, PSTN), a digital subscriber line (Digital Subscriber Line, DSL), a digital cable, or a direct cable connection; and/or another data connection network; and/or a wireless interface, for example, a cellular network, a wireless local area network (Wireless Local Area Network, WLAN), a digital television network like a digital video broadcast-handheld (Digital Video Broadcast-Handheld, DVB-H) network, a satellite network, or an amplitude modulation-frequency modulation (Amplitude Modulation-Frequency Modulation, AM-FM) broadcast transmitter. A terminal device that is disposed to perform communication through a wireless interface may be referred to as a "wireless communication terminal", a "wireless terminal", or a "mobile terminal". Examples of the terminal device include, but are not limited to, a satellite phone or a cellular phone; a personal communication system (Personal communication system, PCS) terminal that may combine a cellular radio telephone with data processing, facsimile, and data communication capabilities; a personal digital assistant (personal digital assistant, PDA) that may include a radio telephone, a pager, Internet/intranet access, a Web browser, a notebook, a calendar, and/or a global positioning system (Global Positioning System, GPS) receiver; and a conventional laptop and/or palmtop receiver or another electronic apparatus including a radio telephone transceiver. The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in the Internet of Things or Internet of Vehicles, a terminal device in a 5G network, or a future evolved public land mobile network (public land mobile network, PLMN), a terminal device of any form in a future network, and the like.

The AN device is a device that connects the terminal device to a wireless network, and may be specifically a base station. There may be various forms of base stations, for example, a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB), a relay station, an access point, a vehicle-mounted device, or a wearable device in LTE, a next generation NodeB (next generation NodeB, gNB) in a 5G system, a base station in a future evolved public land mobile network (public land mobile network, PLMN), or the like. This is not specifically limited in embodiments of this application.

It can be learned from FIG. 1 that, the communication system 100 is applied to a carrier aggregation (Carrier Aggregation, CA) scenario. Carrier aggregation means that a plurality of carriers are aggregated together to provide a service for UE, so that a data transmission capacity of the communication system can be increased. For the UE, each carrier may be considered as a cell. The access network device 102 covers a plurality of cells (a primary cell, a secondary cell 1, a secondary cell 2, ..., and a secondary cell n). These aggregated cells may be classified into a primary cell (Primary Cell, PCell) and a secondary cell (Secondary Cell, SCell). When the UE accesses a network, the UE first accesses the primary cell, and then the primary cell adds several secondary cells (for example, the secondary cell 1, the secondary cell 2, ..., and the secondary cell n) for the UE based on an RRC reconfiguration message, so that the UE may subsequently access the secondary cells for communication to obtain a corresponding service.

The primary cell may configure the added secondary cells to be in an activated (activated) state or a deactivated (deactivated) state. The primary cell adjusts a state of each secondary cell by using a media access control-control element (Medium Access Control-Control Element, MAC CE) for secondary cell activation and deactivation. When a secondary cell is in an activated state, the UE may send a sounding reference signal (Sounding Reference Signal, SRS), report channel state information (Channel State Information, CSI), detect a physical downlink control channel (Physical Downlink Control Channel, PDCCH), and the like via the secondary cell. When a secondary cell is in a deactivated state, the UE does not send an SRS, measure or report CSI, transmit uplink data, or detect a PDCCH via the secondary cell.

A plurality of cells in FIG. 1 are deployed in the same access network device 102. This deployment manner is also referred to as intra-site (intra-site) carrier aggregation. In an intra-site carrier aggregation scenario, data transmission between cells may be understood as data transmission between different network elements (function modules) corresponding to the cells in the access network device 102.

It should be understood that embodiments of this application are not limited to being applied to the architecture of the communication system shown in FIG. 1. For example, a communication system to which the pathloss reference signal determining method in embodiments of this application may be applied may include more or fewer network elements or devices. The devices or the network elements in FIG. 1 may be hardware, or may be software obtained through function division or a combination of hardware and software. The devices or the network elements in FIG. 1 may communicate with each other through another device or network element.

For example, for a communication system 200 to which an embodiment of this application is applied, refer to FIG. 2. FIG. 2 is a diagram of an architecture of another communication system according to an embodiment of this application.

As shown in FIG. 2, the communication system 200 mainly includes two parts: an access network and user equipment (user equipment, UE) 101. The access network is used to implement a function related to radio access, and mainly includes access network (access network, AN) devices (102, 103, 104, and 105). The access network devices include a radio access network (radio access network, RAN) device and another device (for example, Wi-Fi) for access through an air interface. Interfaces between network elements are shown in FIG. 2. It should be understood that the network elements may alternatively communicate with each other through a service-oriented interface.

The UE and the AN device in the communication system shown in this embodiment of this application are similar to that in the communication system in FIG. 1. Details are not described herein again.

It can be learned from FIG. 2 that, when the communication system 200 is applied to a carrier aggregation (Carrier Aggregation, CA) scenario, a data transmission capacity of the communication system can be increased. Different from the carrier aggregation scenario of the communication system shown in FIG. 1, a plurality of cells in this embodiment of this application are respectively deployed in different access network devices. For example, a primary cell is deployed in an access network device 102, a secondary cell 1 is deployed in an access network device 103, a secondary cell 2 is deployed in an access network device 104, and a secondary cell n is deployed in an access network device 105. This deployment manner is also referred to as inter-site (inter-site) carrier aggregation. In an inter-site carrier aggregation scenario, data transmission between cells may be understood as data transmission between different access network devices corresponding to the cells. When the UE accesses a network, the UE first accesses the primary cell, and then the primary cell adds several secondary cells (for example, the secondary cell 1, the secondary cell 2, ..., and the secondary cell n) for the UE based on an RRC reconfiguration message, so that the UE may subsequently access the secondary cells for communication to obtain a corresponding service.

It should be understood that embodiments of this application are not limited to being applied to the architecture of the communication system shown in FIG. 2. For example, a communication system to which the pathloss reference signal determining method in embodiments of this application may be applied may include more or fewer network elements or devices. The devices or the network elements in FIG. 2 may be hardware, or may be software obtained through function division or a combination of hardware and software. The devices or the network elements in FIG. 2 may communicate with each other through another device or network element.

Based on the carrier aggregation scenario to which the communication system in FIG. 1 or FIG. 2 is applied, when the UE accesses a network, the UE first accesses the primary cell, and then the primary cell adds several secondary cells (for example, the secondary cell 1, the secondary cell 2, ..., and the secondary cell n) for the UE based on an RRC reconfiguration message, so that the UE may subsequently access the secondary cells for data transmission to obtain a corresponding service.

To enable the UE to smoothly access the secondary cells for data transmission, the UE further needs to perform uplink synchronization or downlink synchronization with the accessed secondary cells. The following briefly describes uplink synchronization and downlink synchronization between the UE and the secondary cells.

Because distances between different UE in a cell and a network device (a network element) are different, time at which uplink signals of the different UE arrive at the network device is also different. This difference causes mutual interference between the uplink signals of the different UE in the cell. To reduce such interference, moments at which the uplink signals of the different UE in the cell arrive at the network device should be aligned as much as possible. Generally, an uplink timing advance (Timing Advance, TA) mechanism is used to implement time synchronization of receiving uplink signals on a network device side, namely, uplink synchronization between the UE and the secondary cells.

A principle of the TA is that a timing advance (namely, a TA value) is configured for the UE, and the UE adjusts uplink timing based on the configured TA value when sending uplink data. TA values of the different UE are appropriately configured, so that the moments at which the uplink signals of the different UE arrive at the network device may be approximately the same. In addition, the network device may calculate a TA value of UE by measuring an uplink signal, for example, a preamble (preamble) signal or a sounding reference signal (Sounding Reference Signal, SRS), that is sent by the UE. The network device sends a timing advance command (Timing Advance Command, TAC) to the UE, and notifies the UE of the calculated TA value. The TAC may be carried in a MAC CE.

Downlink synchronization indicates synchronization on the UE side, that is, the UE obtains synchronization of timing, frequency, and the like of the network device. The UE implements downlink synchronization by receiving a synchronization signal sent by the network device. The synchronization signal includes a primary synchronization signal (Primary Synchronization Signal, PSS) and a secondary synchronization signal (Secondary Synchronization Signal, SSS), and is carried in a synchronization signal block (Synchronization Signal Block, SSB). A cell usually periodically sends an SSB, and the UE searches for and receives the SSB to obtain downlink synchronization with the secondary cell.

In addition, after the several secondary cells are added for the UE based on the RRC reconfiguration message, the secondary cells further need to be activated based on MAC signaling, so that the secondary cells have a data receiving and sending capability. According to a stipulation of a secondary cell activation delay in an existing protocol, after receiving activation information of a secondary cell, a terminal device needs to feed back a corresponding hybrid automatic repeat request (Hybrid Automatic Repeat Request, HARQ), then perform an activation process, and feed back CSI, indicating that the secondary cell completes the activation process. In this way, the UE may subsequently access the activated secondary cell for data transmission, to obtain a corresponding service.

The secondary cell activation process includes a plurality of steps. For a secondary cell in a frequency range 1 (Frequency Range 1, FR1), the activation process includes processes such as cell search, automatic gain control (automatic gain control, AGC), and timing synchronization. For a secondary cell in a frequency range 2 (Frequency Range 2, FR2), because beam information is related, the activation process needs to include more steps. For example, time of activating a channel state information-reference signal (channel state information-reference signal, CSI-RS) for CSI reporting and time of configuring a transmission configuration indicator (Transmission Configuration Indicator, TCI) are further included. In addition, if a to-be-activated secondary cell is an unknown cell, the UE further needs to measure and report a layer 1 reference signal received power (Layer 1 reference signal received power, L1-RSRP), to notify a network of beam information. Currently, for a secondary cell for which no uplink channel is configured, after HARQ feedback and activation steps are completed, CSI information may be fed back via a corresponding PUCCH, indicating that activation of the secondary cell is completed. For a secondary cell for which an uplink channel is configured, the following steps further need to be considered: determining an uplink transmit power of the uplink channel, determining an uplink transmit beam, and updating a TA (if the TA is invalid).

A manner of updating the TA may be: When a TA value corresponding to a timing advance group (Timing Advance Group, TAG) in which the secondary cell is located has expired, that is, uplink synchronization with the network device has expired in this case, the UE cannot directly send uplink data, and needs to obtain uplink synchronization again before sending the uplink data. Specifically, random access of the UE may be triggered by receiving physical downlink control channel indication information sent by the network device, and the UE updates a valid TA by initiating a random access process, to have an uplink data sending capability. The physical downlink control channel indication information further needs to explicitly indicate an associated synchronization signal block (synchronization signal block, SSB).

A manner of determining the uplink transmit power of the uplink channel may be: The UE calculates a downlink pathloss, and specifically, may obtain the downlink pathloss through calculation by obtaining a power of a channel sent by the network side and a power measured for a pathloss reference signal (pathloss reference signal, PL-RS). In different application scenarios, different reference signals may be selected as pathloss reference signals for calculating downlink pathlosses, and the downlink pathlosses and uplink transmit powers of the uplink channel that are obtained through calculation are also different.

According to the stipulation of the existing protocol, there may be four different cases mainly based on whether the network side configures a first parameter and a second parameter for the secondary cell, and different reference signals are selected as the pathloss reference signals in the cases. The first parameter is a group of parameters that are configured by the network side and that are used to perform uplink signal pathloss estimation, and the second parameter is a group of parameters that are configured by the network side and that are used for determining a spatial relationship of an uplink channel and for power control. Details are described below.
1. If the first parameter is not configured in configuration information corresponding to the secondary cell, the UE selects a synchronization signal block (synchronization signal block, SSB) of a master information block (master information block, MIB) as a pathloss reference signal.
2. If the first parameter and the second parameter are configured in configuration information corresponding to the secondary cell, the UE determines a pathloss reference signal based on indication of the second parameter. For example, the spatial relationship of the uplink channel determined by the second parameter may indicate a reference signal used to determine an uplink spatial relationship, and may also support an identity ID of the pathloss reference signal.
3. If the first parameter is configured in configuration information corresponding to the secondary cell, but the second parameter is not configured, the UE selects a reference signal whose index (index) configured in the first parameter is 0 as a pathloss reference signal.
4. If the first parameter and the second parameter are not configured in configuration information corresponding to the secondary cell, and a third parameter (enableDefaultBeamPL-forPUCCH) is configured by the network side, in this case, the UE selects a reference signal indicated by transmission configuration indicator information of a control-resource set (control-resource set, CORESET) of a current downlink bandwidth as a pathloss reference signal.

In the first case, if the first parameter is not configured in the configuration information corresponding to the secondary cell, the UE selects the synchronization signal block of the MIB as the pathloss reference signal, and calculates the downlink pathloss, to determine the uplink transmit power of the uplink channel. However, in a process of activating the secondary cell, after receiving the activation information, the UE does not necessarily need to read the master information block of the secondary cell. Therefore, in this case, a specific reference signal selected by the UE as the pathloss reference signal is not clear. As a result, the uplink transmit power of the uplink channel determined by the UE may be inaccurate, or the UE needs to wait for a pathloss reference signal configured by the network side, resulting in an additional activation delay of the secondary cell.

For the foregoing technical problems that accuracy and efficiency of determining the uplink transmit power of the uplink channel are low, and the additional activation delay may be generated, this application provides a pathloss reference signal determining method and a related apparatus, and relates to the field of communication technologies. A specific reference signal used as a pathloss reference signal is clearly specified. A reference signal that can truly reflect a downlink pathloss status corresponding to a terminal device is selected as the pathloss reference signal, so that a downlink pathloss can be accurately calculated, to improve accuracy and efficiency of determining the uplink transmit power of the uplink channel, and eliminate the additional activation delay.

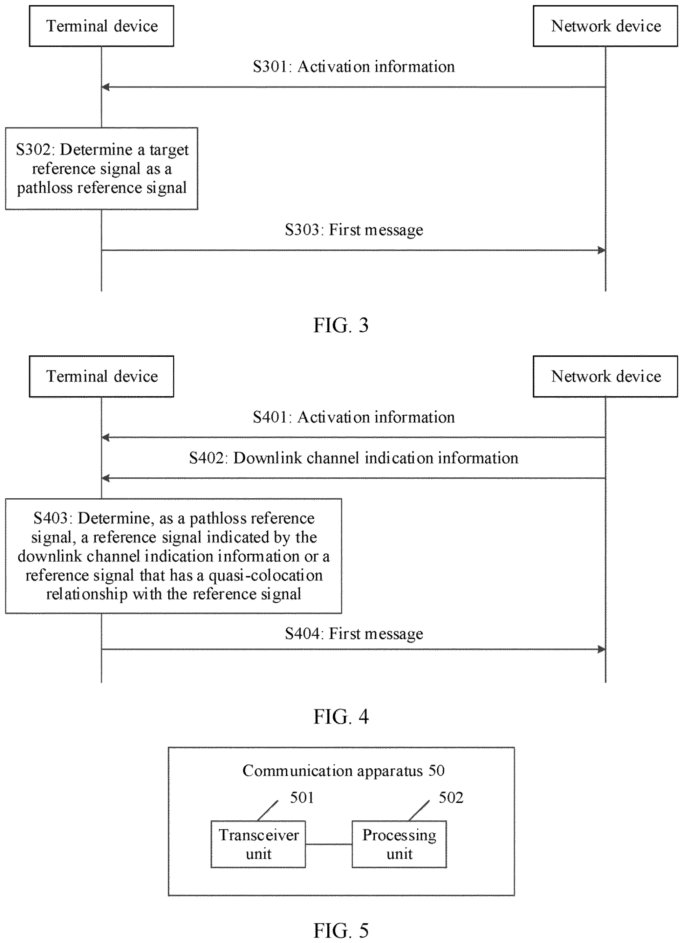

Refer to FIG. 3. FIG. 3 is a schematic flowchart of a pathloss reference signal determining method according to an embodiment of this application. The pathloss reference signal determining method is applied to the field of communication technologies.

As shown in FIG. 3, a communication system to which the pathloss reference signal determining method in this embodiment of this application is applied includes but is not limited to a terminal device and a network device.

As shown in FIG. 3, the pathloss reference signal determining method in this embodiment of this application may include step S301, step S302, and step S303. An execution sequence of step S301, step S302, and step S303 is not limited in this embodiment of this application. Specifically, the pathloss reference signal determining method includes but is not limited to the following steps.

Step S301: The terminal device receives activation information sent by the network device, and correspondingly, the network device sends the activation information to the terminal device.

The activation information indicates that a first cell is activated, and the first cell is a cell for which an uplink channel is configured. The first cell may be specifically the secondary cell 1, the secondary cell 2, ..., or the secondary cell n in FIG. 1 or FIG. 2. The uplink channel may include but is not limited to an uplink channel, for example, a physical uplink control channel (physical uplink control channel, PUCCH) or a physical uplink shared channel (physical uplink shared channel, PUSCH), that corresponds to the terminal device.

The network device in this embodiment of this application is a network device corresponding to the first cell, and may be specifically the network device 102 in FIG. 1. Specifically, when a primary cell currently accessed by the terminal device and a secondary cell represented by the first cell are deployed on a same network device (for example, a base station), the network device in this embodiment of this application may alternatively be a network device corresponding to the first cell and the primary cell. The terminal device in this embodiment of this application is a device equipped with a processor that may be configured to execute computer-executable instructions, and may be specifically a terminal device like a computer or a mobile phone, or may be specifically the terminal device 101 in FIG. 1 or FIG. 2. The terminal device is configured to select, as a pathloss reference signal, a reference signal that can truly reflect a downlink pathloss status corresponding to the terminal device, to accurately calculate a downlink pathloss, so as to improve accuracy and efficiency of determining an uplink transmit power of the uplink channel, and eliminate an additional activation delay.

It should be noted that, in this embodiment of this application, the intra-site carrier aggregation scenario shown in FIG. 1 is used as an example for description. To be specific, the primary cell currently accessed by the terminal device and the secondary cell represented by the first cell are deployed on a same network device (for example, a base station). The network device in this embodiment of this application is a network device corresponding to the first cell and the primary cell. Specifically, the primary cell currently accessed by the terminal device may correspond to the primary cell shown in FIG. 1, and the first cell in this embodiment of this application may correspond to any one of the secondary cell 1, the secondary cell 2, ..., and the secondary cell n shown in FIG. 1. Correspondingly, the network device in this embodiment of this application may correspond to the network device 102 in FIG. 1, and the terminal device in this embodiment of this application may correspond to the terminal device 101 in FIG. 1.

Step S302: The terminal device determines a target reference signal as the pathloss reference signal.

After the activation information sent by the network device is received, it indicates that the secondary cell is in an activation process. In the process of activating the secondary cell, the terminal device needs to feed back a corresponding HARQ message, then activate the secondary cell, and feed back CSI, to indicate that the secondary cell completes the activation process, so that the terminal device can subsequently perform data transmission with the activated secondary cell, to obtain a corresponding service.

In this embodiment of this application, in a process of activating a secondary cell for which an uplink channel is configured, for example, in a process of activating a secondary cell for which a PUCCH is configured, the terminal device further needs to determine an uplink transmit power of the uplink channel. Specifically, a downlink pathloss may be obtained through calculation by obtaining a power of a channel sent by the network side and a power measured for the pathloss reference signal, and then the uplink transmit power of the uplink channel is determined based on the downlink pathloss. In different application scenarios, different reference signals may be selected as pathloss reference signals for calculating downlink pathlosses, and the downlink pathlosses and uplink transmit powers of the uplink channel that are obtained through calculation are also different.

According to a stipulation in an existing protocol, if no parameter used to perform uplink channel pathloss estimation is configured in configuration information corresponding to the secondary cell, the terminal device selects a synchronization signal block of an MIB as the pathloss reference signal, and calculates the downlink pathloss, to determine the uplink transmit power of the uplink channel.

However, in the process of activating the secondary cell, after receiving the activation information, the terminal device does not necessarily need to read a master information block of the secondary cell. Therefore, in this case, a specific reference signal selected by the terminal device as the pathloss reference signal is not clear. As a result, the uplink transmit power of the uplink channel determined by the terminal device may be inaccurate, or the terminal device needs to wait for a pathloss reference signal configured by the network side, resulting in an additional activation delay of the secondary cell.

For the foregoing technical problems that accuracy and efficiency of determining the uplink transmit power of the uplink channel are low, and the additional activation delay may be generated, in this step, the terminal device determines the target reference signal as the pathloss reference signal. The target reference signal includes a reference signal used to reflect the downlink pathloss status corresponding to the terminal device. The reference signal used to reflect the downlink pathloss status corresponding to the terminal device is determined as the pathloss reference signal, so that the downlink pathloss is calculated, to determine the uplink transmit power of the uplink channel, so as to complete activation of the secondary cell.

In addition, the method for determining the target reference signal as the pathloss reference signal provided in this step is not only applicable to the process of activating the secondary cell. In addition, after the secondary cell is activated, the method provided in this step may still be used to determine the target reference signal as the pathloss reference signal. For example, after the secondary cell is activated, and the network device has not configured a pathloss reference signal, the target reference signal may also be determined as the pathloss reference signal according to the method in this step, so that the downlink pathloss can be accurately calculated, to improve accuracy and efficiency of determining the uplink transmit power of the uplink channel.

In comparison with the stipulation in the existing protocol, in this step, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the uplink channel, and eliminate the additional activation delay.

Specifically, when no parameter used to perform uplink signal pathloss estimation is configured in the configuration information corresponding to the secondary cell, the terminal device determines the target reference signal as the pathloss reference signal, where the target reference signal includes a reference signal used to reflect the downlink pathloss status corresponding to the terminal device.

In some possible embodiments, the target reference signal may include but is not limited to a first reference signal, a second reference signal, a reference signal that has a quasi-colocation (quasi-colocation, QCL) relationship with the first reference signal, or a reference signal that has a quasi-colocation relationship with the second reference signal.

The first reference signal is a reference signal corresponding to a layer 3 measurement result reported by the terminal device, and the second reference signal is a reference signal corresponding to a layer 1 measurement result reported by the terminal device.

Specifically, the layer 3 measurement result may be a layer 3 reference signal received power (Layer 3 reference signal received power, L3-RSRP). The first reference signal may be any one of reference signals corresponding to a plurality of reported layer 3 reference signal received powers, may be a reference signal corresponding to a highest reported layer 3 reference signal received power, may be a reference signal corresponding to a layer 3 reference signal received power reported within a specified time period, or may be a reference signal corresponding to a most recently reported layer 3 reference signal received power. This is not limited herein. Selection may be performed based on a specific application scenario.

Specifically, the layer 1 measurement result may be a layer 1 reference signal received power (Layer 1 reference signal received power, L1-RSRP). Selection of the second reference signal is similar to selection of the first reference signal. The second reference signal may be any one of reference signals corresponding to a plurality of reported layer 1 reference signal received powers, may be a reference signal corresponding to a highest reported layer 1 reference signal received power, may be a reference signal corresponding to a layer 1 reference signal received power reported within a specified time period, or may be a reference signal corresponding to a most recently reported layer 1 reference signal received power. This is not limited herein. Selection may be performed based on a specific application scenario.

When the configuration information corresponding to the secondary cell does not include the parameter used to perform downlink channel pathloss estimation, the terminal device may determine, as the pathloss reference signal, the first reference signal or the reference signal that has the quasi-colocation relationship with the first reference signal, or determine, as the pathloss reference signal, the second reference signal or the reference signal that has the quasi-colocation relationship with the second reference signal, and calculate the downlink pathloss, to determine the uplink transmit power of the uplink channel, so as to complete activation of the first cell.

Further, it may be determined, based on whether the secondary cell is a known cell or an unknown cell, whether the target reference signal includes the first reference signal or the reference signal that has the quasi-colocation relationship with the first reference signal, or includes the second reference signal or the reference signal that has the quasi-colocation relationship with the second reference signal.

When the activation information is received, if the terminal device has previously reported a measurement result of the cell, the cell is considered as a known cell. If the terminal device has not reported a measurement result of the cell, the cell is considered as an unknown cell.

Specifically, when the secondary cell is a known cell, the target reference signal includes the first reference signal or the reference signal that has the quasi-colocation relationship with the first reference signal. In this case, when the configuration information corresponding to the secondary cell does not include the parameter used to perform downlink channel pathloss estimation, the terminal device may determine, as the pathloss reference signal, the first reference signal or the reference signal that has the quasi-colocation relationship with the first reference signal.

When the secondary cell is an unknown cell, the target reference signal includes the second reference signal or the reference signal that has the quasi-colocation relationship with the second reference signal. In this case, when the configuration information corresponding to the secondary cell does not include the parameter used to perform downlink channel pathloss estimation, the terminal device may determine, as the pathloss reference signal, the second reference signal or the reference signal that has the quasi-colocation relationship with the second reference signal.

Optionally, after the terminal device reports the layer 1 reference signal received power or the layer 3 reference signal received power, the network side may indicate, through signaling, a reference signal corresponding to the layer 1 reference signal received power or the layer 3 reference signal received power as the pathloss reference signal. The signaling may be RRC signaling, MAC signaling, DCI signaling, or the like.

Optionally, the network side may indicate, in signaling for activating the secondary cell, the terminal device to select a corresponding reference signal as the pathloss reference signal, or may indicate, through separate signaling, the terminal device to select a corresponding reference signal as the pathloss reference signal.

In this embodiment of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the uplink channel, and eliminate the additional activation delay.

In some possible embodiments, the target reference signal includes a third reference signal or a reference signal that has a quasi-colocation relationship with the third reference signal.

The third reference signal is a reference signal indicated by the spatial relationship of the uplink channel, for example, a synchronization signal block, a channel state information-reference signal, or a sounding reference signal.

Specifically, when the configuration information corresponding to the secondary cell does not include the parameter used to perform downlink channel pathloss estimation, the terminal device may determine, as the pathloss reference signal, the third reference signal or the reference signal that has the quasi-colocation relationship with the third reference signal, and calculate the downlink pathloss, to determine the uplink transmit power of the uplink channel, so as to complete activation of the first cell.

In embodiments of this application, the terminal device selects, as the pathloss reference signal, the reference signal indicated by the spatial relationship that is of the uplink channel and that is configured by the network device or a reference signal that has a quasi-colocation relationship with the reference signal, so that the downlink pathloss status corresponding to the terminal device can be truly reflected, and the uplink transmit power of the uplink channel can be determined based on a pathloss corresponding to a transmit direction indicated by the spatial relationship of the uplink channel. In this manner, the terminal device and the network device may establish a consistent understanding of the downlink pathloss, to accurately calculate the downlink pathloss, improve accuracy and efficiency of determining the uplink transmit power of the uplink channel, and eliminate the additional activation delay.

In some possible embodiments, the target reference signal includes a fourth reference signal or a reference signal that has a quasi-colocation relationship with the fourth reference signal.

The fourth reference signal is a reference signal indicated by transmission configuration indicator information of a control resource set of a current downlink bandwidth.

Specifically, when the configuration information corresponding to the secondary cell does not include the parameter used to perform downlink channel pathloss estimation, the terminal device may determine, as the pathloss reference signal, the fourth reference signal or the reference signal that has the quasi-colocation relationship with the fourth reference signal, and calculate the downlink pathloss, to determine the uplink transmit power of the uplink channel, so as to complete activation of the first cell.

In embodiments of this application, the terminal device selects, as the pathloss reference signal, the reference signal indicated by the transmission configuration indicator information that is of the control resource set and that is configured by the network device or a reference signal that has a quasi-colocation relationship with the reference signal, so that the downlink pathloss status corresponding to the terminal device can be truly reflected, and the terminal device may establish a consistent understanding of the downlink pathloss with the network device, to accurately calculate the downlink pathloss, improve accuracy and efficiency of determining the uplink transmit power of the uplink channel, and eliminate the additional activation delay.

In some possible embodiments, the target reference signal includes a fifth reference signal or a reference signal that has a quasi-colocation relationship with the fifth reference signal.

In the process of activating the secondary cell, the terminal device needs to select a synchronization signal to perform precise timing synchronization with the secondary cell, and the fifth reference signal is the synchronization signal that is selected by the terminal device and that is used to perform precise timing synchronization with the secondary cell.

Specifically, when the configuration information corresponding to the secondary cell does not include the parameter used to perform downlink channel pathloss estimation, the terminal device may determine, as the pathloss reference signal, the fifth reference signal or the reference signal that has the quasi-colocation relationship with the fifth reference signal, and calculate the downlink pathloss, to determine the uplink transmit power of the uplink channel, so as to complete activation of the first cell.

In embodiments of this application, the terminal device selects, as the pathloss reference signal, a synchronization signal used to perform precise timing synchronization on the secondary cell or a reference signal that has a quasi-colocation relationship with the synchronization signal, so that the downlink pathloss status corresponding to the terminal device can be truly reflected, to accurately calculate the downlink pathloss, improve accuracy and efficiency of determining the uplink transmit power of the uplink channel, and eliminate the additional activation delay.

In some possible embodiments, the target reference signal includes a sixth reference signal or a reference signal that has a quasi-colocation relationship with the sixth reference signal.

When a timing advance value of the secondary cell is invalid, the terminal device receives downlink channel indication information sent by the network device, triggers random access, and determines a reference signal indicated by the downlink channel indication information as the sixth reference signal.

Specifically, when the configuration information corresponding to the secondary cell does not include the parameter used to perform downlink channel pathloss estimation, and the timing advance value of the secondary cell is invalid, the terminal device may determine, as the pathloss reference signal, the sixth reference signal or the reference signal that has the quasi-colocation relationship with the sixth reference signal, and calculate the downlink pathloss, to determine the uplink transmit power of the uplink channel, so as to complete activation of the first cell.

In embodiments of this application, the terminal device selects, as the pathloss reference signal, the reference signal indicated by the downlink channel indication information used to trigger random access or a reference signal that has a quasi-colocation relationship with the reference signal, so that the downlink pathloss status corresponding to the terminal device can be truly reflected, to accurately calculate the downlink pathloss, improve accuracy and efficiency of determining the uplink transmit power of the uplink channel, and eliminate the additional activation delay.

In some possible embodiments, it may be specified that when a secondary cell for which an uplink channel is configured is activated, for example, when a secondary cell for which a PUCCH is configured is activated, a pathloss reference signal needs to be configured by the network side. In other words, a case in which no pathloss reference signal is configured for a secondary cell having a PUCCH data receiving capability is excluded.

In this case, the terminal device may accurately calculate the downlink pathloss directly based on the pathloss reference signal configured by the network side. This greatly improves accuracy and efficiency of determining the uplink transmit power of the uplink channel, and eliminates the additional activation delay.

It may be understood that, in the foregoing plurality of possible embodiments, a specific reference signal selected as the target reference signal to determine the pathloss reference signal directly affects accuracy of calculating the downlink pathloss and accuracy of determining the uplink transmit power of the uplink channel. Therefore, in different application scenarios, an appropriate reference signal needs to be selected as the target reference signal based on a principle that can truly reflect the downlink pathloss status corresponding to the terminal device, to determine the pathloss reference signal. In other words, the pathloss reference signal should be determined based on a principle that the accuracy of calculating the downlink pathloss is improved and the accuracy of determining the uplink transmit power of the uplink channel is improved, and the foregoing provided limited embodiments should not constitute a limitation on determining the pathloss reference signal in the different application scenarios.

For example, when the configuration information corresponding to the secondary cell does not include the parameter used to perform downlink channel pathloss estimation, and the timing advance value of the secondary cell is invalid, the sixth reference signal or the reference signal that has the quasi-colocation relationship with the sixth reference signal may be determined as the pathloss reference signal according to the method in the foregoing embodiments, to calculate the downlink pathloss, so as to determine the uplink transmit power of the uplink channel, to complete activation of the first cell.

Alternatively, a specific reference signal selected as the pathloss reference signal may be determined based on whether the secondary cell is a known cell or an unknown cell. When the secondary cell is a known cell, the reference signal corresponding to the layer 3 measurement result (for example, the reported layer 3 reference signal received power) reported by the terminal device or a reference signal that has a quasi-colocation relationship with the reference signal is used as the pathloss reference signal corresponding to the layer 3 measurement result; or when the secondary cell is an unknown cell, the reference signal corresponding to the layer 1 measurement result (for example, the reported layer 1 reference signal received power) reported by the terminal device or a reference signal that has a quasi-colocation relationship with the reference signal corresponding to the layer 1 measurement result is used as the pathloss reference signal, to calculate the downlink pathloss, so as to determine the uplink transmit power of the uplink channel, to complete activation of the first cell.

Alternatively, the reference signal indicated by the spatial relationship of the uplink channel or the reference signal that has the quasi-colocation relationship with the reference signal may be used as the pathloss reference signal, to calculate the downlink pathloss, so as to determine the uplink transmit power of the uplink channel, to complete activation of the first cell.

Alternatively, the reference signal indicated by the transmission configuration indicator information of the control resource set of the current downlink bandwidth or the reference signal that has the quasi-colocation relationship with the reference signal may be used as the pathloss reference signal, to calculate the downlink pathloss, so as to determine the uplink transmit power of the uplink channel, to complete activation of the first cell.

Alternatively, the synchronization signal that is selected by the terminal device and that is used to perform precise timing synchronization with the secondary cell or the reference signal that has the quasi-colocation relationship with the synchronization signal may be determined as the pathloss reference signal, to calculate the downlink pathloss, so as to determine the uplink transmit power of the uplink channel, to complete activation of the first cell.

A specific manner of determining the pathloss reference signal may be adjusted based on different requirements, and the final pathloss reference signal should be determined based on a result of improving accuracy of calculating the downlink pathloss and improving accuracy of determining the uplink transmit power of the uplink channel.

Step S303: The terminal device sends a first message to the network device, and correspondingly, the network device receives the first message sent by the terminal device.

After the terminal device determines the pathloss reference signal, and calculates the downlink pathloss, to determine the uplink transmit power of the uplink channel, the secondary cell completes the activation process. After the terminal device accesses the activated secondary cell, the terminal device sends the first message to the network device, where the first message is an uplink message. Correspondingly, the network device receives the first message sent by the terminal device.

A transmit power used by the terminal device to send the first message is the uplink transmit power of the uplink channel determined based on the pathloss reference signal. Therefore, the uplink transmit power of the first message is determined based on the pathloss reference signal, and the pathloss reference signal may be determined based on the target reference signal. The target reference signal includes the reference signal used to reflect the downlink pathloss status corresponding to the terminal device. The pathloss reference signal may be used to calculate the downlink pathloss, so as to determine the uplink transmit power of the first message, so that the network device successfully receives the first message.

Currently, when the terminal device is not configured with the parameter used to perform downlink channel pathloss estimation, the pathloss reference signal is usually determined based on the synchronization signal block of the master information block, and the downlink pathloss is calculated, to determine the uplink transmit power of the first message. However, in the process of activating the secondary cell, after receiving the activation information sent by the network device, the terminal device does not necessarily need to read the master information block of the secondary cell. Therefore, in this case, a specific reference signal used to determine the pathloss reference signal is not clear, and the uplink transmit power of the determined first message may be inaccurate. Consequently, the network device cannot successfully receive the first message. Alternatively, the terminal device needs to wait for the network device to configure the pathloss reference signal for the terminal device, resulting in an additional activation delay of the secondary cell and an additional receiving delay of the first message.

However, in embodiments of this application, the uplink transmit power of the first message received by the network device is determined based on the pathloss reference signal, and the pathloss reference signal is determined based on the target reference signal. The target reference signal includes the reference signal used to reflect the downlink pathloss status corresponding to the terminal device, so that the network device successfully receives the first message. In embodiments of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the first message, and eliminate the additional activation delay of the secondary cell and the additional receiving delay of the first message.

Refer to FIG. 4. FIG. 4 is a schematic flowchart of another pathloss reference signal determining method according to an embodiment of this application, and may also be understood as a variation or a supplement to the flowchart of the pathloss reference signal determining method in FIG. 3.

As shown in FIG. 4, a communication system to which the pathloss reference signal determining method in this embodiment of this application is applied includes but is not limited to a terminal device and a network device. The terminal device in FIG. 3 is equivalent to the terminal device in this embodiment of this application, and the network device in FIG. 3 is equivalent to the network device in this embodiment of this application.

As shown in FIG. 4, the pathloss reference signal determining method in this embodiment of this application may include step S401, step S402, step S403, and step S404. An execution sequence of step S401, step S402, step S403, and step S404 is not limited in this embodiment of this application. Specifically, the pathloss reference signal determining method includes but is not limited to the following steps.

Step S401: The terminal device receives activation information sent by the network device, and correspondingly, the network device sends the activation information to the terminal device.

The activation information indicates that a first cell is activated, and the first cell is a cell for which an uplink channel is configured. The first cell may be specifically the secondary cell 1, the secondary cell 2, ..., or the secondary cell n in FIG. 1 or FIG. 2. The uplink channel may include but is not limited to an uplink channel, for example, a physical uplink control channel (physical uplink control channel, PUCCH) or a physical uplink shared channel (physical uplink shared channel, PUSCH), that corresponds to the terminal device.

The network device in this embodiment of this application is a network device corresponding to the first cell, and may be specifically the network device 102 in FIG. 1. Specifically, when a primary cell currently accessed by the terminal device and a secondary cell represented by the first cell are deployed on a same network device (for example, a base station), the network device in this embodiment of this application may alternatively be a network device corresponding to the first cell and the primary cell. The terminal device in this embodiment of this application is a device equipped with a processor that may be configured to execute computer-executable instructions, and may be specifically a terminal device like a computer or a mobile phone, or may be specifically the terminal device 101 in FIG. 1 or FIG. 2. The terminal device is configured to select, as a pathloss reference signal, a reference signal that can truly reflect a downlink pathloss status corresponding to the terminal device, to accurately calculate a downlink pathloss, so as to improve accuracy and efficiency of determining an uplink transmit power of the uplink channel, and eliminate an additional activation delay.

It should be noted that, in this embodiment of this application, the intra-site carrier aggregation scenario shown in FIG. 1 is used as an example for description. To be specific, the primary cell currently accessed by the terminal device and the secondary cell represented by the first cell are deployed on a same network device (for example, a base station). The network device in this embodiment of this application is a network device corresponding to the first cell and the primary cell. Specifically, the primary cell currently accessed by the terminal device may correspond to the primary cell shown in FIG. 1, and the first cell in this embodiment of this application may correspond to any one of the secondary cell 1, the secondary cell 2, ..., and the secondary cell n shown in FIG. 1. Correspondingly, the network device in this embodiment of this application may correspond to the network device 102 in FIG. 1, and the terminal device in this embodiment of this application may correspond to the terminal device 101 in FIG. 1.

Step S402: The network device sends downlink channel indication information to the terminal device, and correspondingly, the terminal device receives the downlink channel indication information sent by the network device.

When a timing advance value of the secondary cell is invalid, the network device sends the downlink channel indication information to the terminal device, where the downlink channel indication information is used to trigger random access of the terminal device. Correspondingly, the terminal device receives the downlink channel indication information sent by the network device, to perform random access.

Step S403: The terminal device determines, as the pathloss reference signal, a reference signal indicated by the downlink channel indication information or a reference signal that has a quasi-colocation relationship with the reference signal.

Specifically, when configuration information corresponding to the secondary cell does not include a parameter used to perform downlink channel pathloss estimation, and the timing advance value of the secondary cell is invalid, the terminal device may determine, as the pathloss reference signal, the reference signal indicated by the downlink channel indication information or the reference signal that has the quasi-colocation relationship with the reference signal, and calculate the downlink pathloss, to determine the uplink transmit power of the uplink channel, so as to complete activation of the first cell.

In this embodiment of this application, the terminal device selects, as the pathloss reference signal, the reference signal indicated by the downlink channel indication information used to trigger random access or the reference signal that has the quasi-colocation relationship with the reference signal, so that the downlink pathloss status corresponding to the terminal device can be truly reflected, to accurately calculate the downlink pathloss, improve accuracy and efficiency of determining the uplink transmit power of the uplink channel, and eliminate the additional activation delay.

Step S404: The terminal device sends a first message to the network device, and correspondingly, the network device receives the first message sent by the terminal device.

After the terminal device determines the pathloss reference signal, and calculates the downlink pathloss, to determine the uplink transmit power of the uplink channel, the secondary cell completes the activation process. After the terminal device accesses the activated secondary cell, the terminal device sends the first message to the network device, where the first message is an uplink message. Correspondingly, the network device receives the first message sent by the terminal device.

A transmit power used by the terminal device to send the first message is the uplink transmit power of the uplink channel determined based on the pathloss reference signal. Therefore, the uplink transmit power of the first message is determined based on the pathloss reference signal, and the pathloss reference signal may be determined based on a target reference signal. The target reference signal includes the reference signal used to reflect the downlink pathloss status corresponding to the terminal device. The pathloss reference signal may be used to calculate the downlink pathloss, so as to determine the uplink transmit power of the first message, so that the network device successfully receives the first message.

In this embodiment of this application, the uplink transmit power of the first message received by the network device is determined based on the pathloss reference signal, and the pathloss reference signal is determined based on the target reference signal. The target reference signal includes the reference signal used to reflect the downlink pathloss status corresponding to the terminal device, so that the network device successfully receives the first message. In this embodiment of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the first message, and eliminate the additional activation delay of the secondary cell and the additional receiving delay of the first message.

The methods provided in embodiments of this application are described above in detail with reference to FIG. 3 and FIG. 4.

The apparatuses provided in embodiments of this application are described below in detail with reference to FIG. 5 to FIG. 7.

It can be understood that, to implement the functions in the foregoing embodiments, the terminal device and the network device include corresponding hardware structures and/or software modules for performing the functions. A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraint conditions of the technical solutions.

Refer to FIG. 5. FIG. 5 is a diagram of a structure of a communication apparatus according to an embodiment of this application.

As shown in FIG. 5, the communication apparatus 50 may include a transceiver unit 501 and a processing unit 502. The transceiver unit 501 and the processing unit 502 may be software, hardware, or a combination of software and hardware.

The transceiver unit 501 may implement a sending function and/or a receiving function, and the transceiver unit 501 may also be described as a communication unit. Alternatively, the transceiver unit 501 may be a unit integrating an obtaining unit and a sending unit. The obtaining unit is configured to implement a receiving function, and the sending unit is configured to implement a sending function. Optionally, the transceiver unit 501 may be configured to receive information sent by another apparatus, and may be further configured to send information to another apparatus.

In a possible design, the communication apparatus 50 may correspond to the terminal device in the method embodiment shown in FIG. 3. For example, the communication apparatus 50 may be a terminal device, or may be a chip in a terminal device. The communication apparatus 50 may include units configured to perform the operations performed by the terminal device in the method embodiment shown in FIG. 3, and the units in the communication apparatus 50 are separately configured to implement the operations performed by the terminal device in the method embodiment shown in FIG. 3. The units are described below.

The transceiver unit 501 is configured to receive activation information sent by a network device, where the activation information indicates that a first cell is activated, and the first cell is a cell having a data receiving capability of an uplink channel.

The processing unit 502 is configured to determine a target reference signal as a pathloss reference signal, where the target reference signal includes a reference signal used to reflect a downlink pathloss status corresponding to the communication apparatus, and the pathloss reference signal is used to determine an uplink transmit power of the uplink channel.

In this embodiment of this application, a pathloss reference signal determining method is provided. Specifically, the terminal device receives the activation information sent by the network device, to indicate that the first cell is activated, where the first cell is the cell having the data receiving capability of the uplink channel corresponding to the terminal device. In a process of activating the first cell, the terminal device needs to determine the uplink transmit power of the uplink channel corresponding to the terminal device, and a downlink pathloss needs to be calculated for determining the transmit power of the uplink channel. Therefore, the terminal device determines the target reference signal as the pathloss reference signal. The target reference signal includes the reference signal used to reflect the downlink pathloss status corresponding to the terminal device, and the pathloss reference signal may be used to calculate the downlink pathloss, to determine the uplink transmit power of the uplink channel, so as to complete activation of the first cell. In addition, the method for determining the target reference signal as the pathloss reference signal provided in this embodiment of this application is not only applicable to the process of activating the first cell. In addition, after the first cell is activated, when the network device has not configured a pathloss reference signal, the method provided in this embodiment of this application may still be used to determine the target reference signal as the pathloss reference signal.

Currently, when the terminal device is not configured with a parameter used to perform downlink channel pathloss estimation, the terminal device usually obtains a synchronization signal block of a master information block and determines the synchronization signal block as the pathloss reference signal, and calculates the downlink pathloss, to determine the uplink transmit power of the uplink channel. However, in the process of activating the first cell, after receiving the activation information, the terminal device does not necessarily need to read a master information block of the first cell. Therefore, in this case, a specific reference signal selected by the terminal device as the pathloss reference signal is not clear, and the uplink transmit power of the uplink channel determined by the terminal device may be inaccurate, or the terminal device needs to wait for a pathloss reference signal configured by the network device, resulting in an additional activation delay of the first cell.

However, in this embodiment of this application, after receiving the activation information sent by the network device, the terminal device determines, as the pathloss reference signal, the reference signal used to reflect the downlink pathloss status corresponding to the terminal device, and calculates the downlink pathloss, to determine the uplink transmit power of the uplink channel, so as to complete activation of the first cell. In this embodiment of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the uplink channel, and eliminate the additional activation delay.

In a possible implementation, the processing unit 502 is specifically configured to: when configuration information corresponding to the first cell does not include a first parameter used to perform downlink channel pathloss estimation, determine the target reference signal as the pathloss reference signal.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the communication apparatus, and the second reference signal is a reference signal corresponding to a layer 1 measurement result reported by the communication apparatus.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In a possible implementation, the target reference signal includes a fifth reference signal or a reference signal that has a quasi-colocation relationship with the fifth reference signal, and the fifth reference signal is a reference signal used to perform timing synchronization on the first cell.

In a possible implementation, the target reference signal includes a sixth reference signal or a reference signal that has a quasi-colocation relationship with the sixth reference signal.

The transceiver unit 501 is further configured to: when a timing advance value of the first cell is invalid, receive downlink channel indication information sent by the network device.

The processing unit 502 is further configured to determine, as the sixth reference signal, a reference signal indicated by the downlink channel indication information.

In another possible design, the communication apparatus 50 may correspond to the network device in the method embodiment shown in FIG. 3. For example, the communication apparatus 50 may be a network device, or may be a chip in a network device. The communication apparatus 50 may include units configured to perform the operations performed by the network device in the method embodiment shown in FIG. 3, and the units in the communication apparatus 50 are separately configured to implement the operations performed by the network device in the method embodiment shown in FIG. 3. The units are described below.

The transceiver unit 501 is configured to send activation information to a terminal device, where the activation information indicates that a first cell is activated, and the first cell is a cell having a data receiving capability of an uplink channel.

The transceiver unit 501 is further configured to receive a first message sent by the terminal device, where an uplink transmit power of the first message is determined based on a pathloss reference signal, the pathloss reference signal is determined based on a target reference signal, and the target reference signal includes a reference signal used to reflect a downlink pathloss status corresponding to the terminal device.

In this embodiment of this application, a pathloss reference signal determining method is provided. Specifically, the network device sends the activation information to the terminal device, to indicate that the first cell is activated, where the first cell is the cell having the data receiving capability of the uplink channel corresponding to the terminal device. After the terminal device accesses the activated first cell, the network device receives the first message sent by the terminal device. Before sending the first message to the network device, the terminal device needs to determine an uplink transmit power of the uplink channel corresponding to the terminal device, namely, the uplink transmit power of the first message, and a downlink pathloss needs to be calculated for determining the transmit power of the uplink channel. Therefore, the uplink transmit power of the first message is determined based on the pathloss reference signal, and the pathloss reference signal may be determined based on the target reference signal. The target reference signal includes the reference signal used to reflect the downlink pathloss status corresponding to the terminal device. The pathloss reference signal may be used to calculate the downlink pathloss, to determine the uplink transmit power of the first message, so that the network device successfully receives the first message. In addition, the method for determining the target reference signal as the pathloss reference signal provided in this embodiment of this application is not only applicable to a process of activating the first cell. In addition, after the first cell is activated, when the network device has not configured a pathloss reference signal, the method provided in this embodiment of this application may still be used to determine the target reference signal as the pathloss reference signal.

Currently, when the terminal device is not configured with the parameter used to perform downlink channel pathloss estimation, the pathloss reference signal is usually determined based on a synchronization signal block of a master information block, and the downlink pathloss is calculated, to determine the uplink transmit power of the first message. However, in the process of activating the first cell, after receiving the activation information sent by the network device, the terminal device does not necessarily need to read a master information block of the first cell. Therefore, in this case, a specific reference signal used to determine the pathloss reference signal is not clear, and the uplink transmit power of the determined first message may be inaccurate. Consequently, the network device cannot successfully receive the first message. Alternatively, the terminal device needs to wait for the network device to configure the pathloss reference signal for the terminal device, resulting in an additional activation delay of the first cell and an additional receiving delay of the first message.

However, in this embodiment of this application, the uplink transmit power of the first message received by the network device is determined based on the pathloss reference signal, and the pathloss reference signal is determined based on the target reference signal. The target reference signal includes the reference signal used to reflect the downlink pathloss status corresponding to the terminal device, so that the network device successfully receives the first message. In this embodiment of this application, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the first message, and eliminate the additional activation delay of the first cell and the additional receiving delay of the first message.

In a possible implementation, configuration information corresponding to the first cell does not include a first parameter used to perform downlink channel pathloss estimation, and the pathloss reference signal is determined based on the target reference signal.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In a possible implementation, the target reference signal includes a fifth reference signal or a reference signal that has a quasi-colocation relationship with the fifth reference signal, and the fifth reference signal is a reference signal used to perform timing synchronization on the first cell.

In a possible implementation, the target reference signal includes a sixth reference signal or a reference signal that has a quasi-colocation relationship with the sixth reference signal.

The transceiver unit 501 is further configured to: when a timing advance value of the first cell is invalid, send downlink channel indication information to the terminal device, where the sixth reference signal is determined based on a reference signal indicated by the downlink channel indication information.

According to this embodiment of this application, the units in the apparatus shown in FIG. 5 may be separately or all combined into one or more other units, or one or more units in the apparatus may be further split into a plurality of units with smaller functions. This can implement a same operation without affecting implementation of technical effect of embodiments of this application. The foregoing units are obtained through division based on logical functions. In an actual application, a function of one unit may be implemented by a plurality of units, or functions of a plurality of units are implemented by one unit. In another embodiment of this application, the terminal device or the network device may alternatively include another unit. In an actual application, these functions may alternatively be implemented with assistance of the another unit, and may be collaboratively implemented by a plurality of units.

It should be noted that, for implementations of units, refer to corresponding descriptions in the method embodiments shown in FIG. 3 and FIG. 4.

In the communication apparatus 50 described in FIG. 5, a specific reference signal used as the pathloss reference signal is clearly specified. A reference signal that can truly reflect the downlink pathloss status corresponding to the terminal device is selected as the pathloss reference signal, so that the downlink pathloss can be accurately calculated, to improve accuracy and efficiency of determining the uplink transmit power of the uplink channel, and eliminate the additional activation delay.

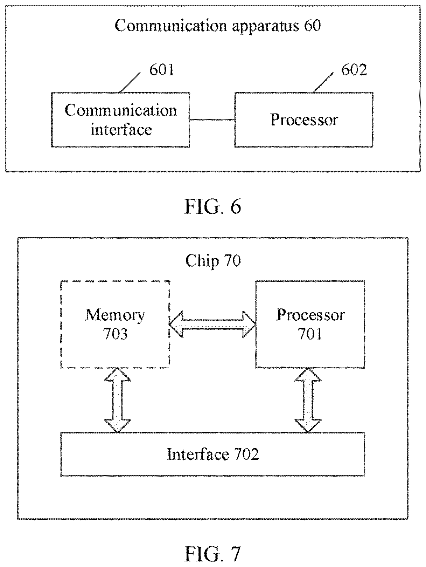

Refer to FIG. 6. FIG. 6 is a diagram of a structure of a communication apparatus according to an embodiment of this application.

It should be understood that the communication apparatus 60 shown in FIG. 6 is merely an example. The communication apparatus in this embodiment of this application may further include another component, include a component with a function similar to that of each component in FIG. 6, or does not necessarily need to include all components in FIG. 6.

The communication apparatus 60 includes a communication interface 601 and at least one processor 602.

The communication apparatus 60 may correspond to any network element or device in a terminal device or a network device. The communication interface 601 is configured to receive and send a signal, and the at least one processor 602 executes program instructions, so that the communication apparatus 60 implements a corresponding procedure of a method performed by a corresponding network element in the foregoing method embodiments.

In a possible design, the communication apparatus 60 may correspond to the terminal device in the method embodiment shown in FIG. 3. For example, the communication apparatus 60 may be a terminal device, or may be a chip in a terminal device. The communication apparatus 60 may include components configured to perform the operations performed by the terminal device in the foregoing method embodiments. In addition, the components in the communication apparatus 60 are separately configured to implement the operations performed by the terminal device in the foregoing method embodiments. Details may be described below.

The terminal device receives activation information sent by a network device, where the activation information indicates that a first cell is activated, and the first cell is a cell having a data receiving capability of an uplink channel.

The terminal device determines a target reference signal as a pathloss reference signal, where the target reference signal includes a reference signal used to reflect a downlink pathloss status corresponding to the terminal device, and the pathloss reference signal is used to determine an uplink transmit power of the uplink channel.

In a possible implementation, the determining a target reference signal as a pathloss reference signal includes:
when configuration information corresponding to the first cell does not include a first parameter used to perform downlink channel pathloss estimation, determining the target reference signal as the pathloss reference signal.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In a possible implementation, the target reference signal includes a fifth reference signal or a reference signal that has a quasi-colocation relationship with the fifth reference signal, and the fifth reference signal is a reference signal used to perform timing synchronization on the first cell.

In a possible implementation, the target reference signal includes a sixth reference signal or a reference signal that has a quasi-colocation relationship with the sixth reference signal. The method further includes:
when a timing advance value of the first cell is invalid, receiving downlink channel indication information sent by the network device; and
determining, as the sixth reference signal, a reference signal indicated by the downlink channel indication information.

In another possible design, the communication apparatus 60 may correspond to the network device in the method embodiment shown in FIG. 3. For example, the communication apparatus 60 may be a network device, or may be a chip in a network device. The communication apparatus 60 may include components configured to perform the operations performed by the network device in the foregoing method embodiments. In addition, the components in the communication apparatus 60 are separately configured to implement the operations performed by the network device in the foregoing method embodiments. Details may be described below.

The network device sends activation information to a terminal device, where the activation information indicates that a first cell is activated, and the first cell is a cell having a data receiving capability of an uplink channel.

The network device receives a first message sent by the terminal device, where an uplink transmit power of the first message is determined based on a pathloss reference signal, the pathloss reference signal is determined based on a target reference signal, and the target reference signal includes a reference signal used to reflect a downlink pathloss status corresponding to the terminal device.

In a possible implementation, configuration information corresponding to the first cell does not include a first parameter used to perform downlink channel pathloss estimation, and the pathloss reference signal is determined based on the target reference signal.

In a possible implementation, the target reference signal includes a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

In a possible implementation, the first cell is a known cell, and the target reference signal includes the first reference signal or the reference signal that has the quasi-colocation relationship with the first reference signal.

Alternatively, the first cell is an unknown cell, and the target reference signal includes the second reference signal or the reference signal that has the quasi-colocation relationship with the second reference signal.

In a possible implementation, when the configuration information corresponding to the first cell includes a second parameter used to determine a spatial relationship of the uplink channel, the target reference signal includes a third reference signal or a reference signal that has a quasi-colocation relationship with the third reference signal, and the third reference signal is a reference signal indicated by the second parameter.

In a possible implementation, the target reference signal includes a fourth reference signal or a reference signal that has a quasi-colocation relationship with the fourth reference signal, and the fourth reference signal is a reference signal indicated by transmission configuration indicator information of a control resource set of a current downlink bandwidth.

In a possible implementation, the target reference signal includes a fifth reference signal or a reference signal that has a quasi-colocation relationship with the fifth reference signal, and the fifth reference signal is a reference signal used to perform timing synchronization on the first cell.

In a possible implementation, the target reference signal includes a sixth reference signal or a reference signal that has a quasi-colocation relationship with the sixth reference signal. The method further includes:
when a timing advance value of the first cell is invalid, sending downlink channel indication information to the terminal device, where the sixth reference signal is determined based on a reference signal indicated by the downlink channel indication information.

In the communication apparatus 60 described in FIG. 6, a specific reference signal used as the pathloss reference signal is clearly specified. A reference signal that can truly reflect the downlink pathloss status corresponding to the terminal device is selected as the pathloss reference signal, so that a downlink pathloss can be accurately calculated, to improve accuracy and efficiency of determining the uplink transmit power of the uplink channel, and eliminate additional activation delay.

For a case in which the communication apparatus may be a chip or a chip system, refer to a diagram of a structure of a chip shown in FIG. 7.

As shown in FIG. 7, the chip 70 includes a processor 701 and an interface 702. There may be one or more processors 701, and there may be a plurality of interfaces 702. It should be noted that a function corresponding to each of the processor 701 and the interface 702 may be implemented by using a hardware design, may be implemented by using a software design, or may be implemented in a combination of software and hardware. This is not limited herein.

Optionally, the chip 70 may further include a memory 703. The memory 703 is configured to store necessary program instructions and data.

In this application, the processor 701 may be configured to: invoke, from the memory 703, a program for implementing the pathloss reference signal determining method provided in one or more embodiments of this application on one or more devices or network elements in the terminal device or the network device, and execute instructions included in the program. The interface 702 may be configured to output an execution result of the processor 701. In this application, the interface 702 may be specifically configured to output each message or information of the processor 701.

For the pathloss reference signal determining method provided in one or more embodiments of this application, refer to embodiments shown in FIG. 3 and FIG. 4. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 3 and FIG. 4 may be implemented.

According to the methods provided in embodiments of this application, this application further provides a computer program product. The computer program product includes a computer program. When the computer program is run on a computer, the methods shown in FIG. 3 and FIG. 4 may be implemented.

An embodiment of this application further provides a system. The system includes at least one of the communication apparatus 50, the communication apparatus 60, or the chip 70, and is configured to perform steps performed by a corresponding network element in any one of embodiments in FIG. 3 and FIG. 4.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processing apparatus may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The terminal device and the network device in the foregoing apparatus embodiments completely correspond to the terminal device and the network device in the method embodiments, and corresponding modules or units perform corresponding steps. For example, a communication unit (a transceiver) performs a receiving or sending step in the method embodiments, and a processing unit (a processor) may perform steps other than sending and receiving. For a function of a specific unit, refer to a corresponding method embodiment. There may be one or more processors.

It should be understood that, an "embodiment" mentioned throughout this specification means that particular features, structures, or characteristics related to this embodiment are included in at least one embodiment of this application. Therefore, embodiments in the entire specification do not necessarily indicate a same embodiment. In addition, these particular features, structures, or characteristics may be combined in one or more embodiments in any appropriate manner.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional entry of the item. When an expression is "the item includes at least one of the following: A, B, ..., and X", that is, more elements are included in the expression, a case to which the item is applicable may also be obtained according to the foregoing rule.

It may be understood that, in embodiments of this application, a terminal device and a network device may perform some or all of steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A pathloss reference signal determining method, comprising:
receiving activation information sent by a network device, wherein the activation information indicates that a first cell is activated, and the first cell is a cell having a data receiving capability of an uplink channel; and
determining a target reference signal as a pathloss reference signal, wherein the target reference signal comprises a reference signal used to reflect a downlink pathloss status corresponding to a terminal device, and the pathloss reference signal is used to determine an uplink transmit power of the uplink channel.

2. The method according to claim 1, wherein the determining a target reference signal as a pathloss reference signal comprises:
when configuration information corresponding to the first cell does not comprise a first parameter used to perform downlink channel pathloss estimation, determining the target reference signal as the pathloss reference signal.

3. The method according to claim 1 or 2, wherein the target reference signal comprises a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

4. The method according to claim 3, wherein the first cell is a known cell, and the target reference signal comprises the first reference signal or the reference signal that has the quasi-colocation relationship with the first reference signal; or
the first cell is an unknown cell, and the target reference signal comprises the second reference signal or the reference signal that has the quasi-colocation relationship with the second reference signal.

5. The method according to any one of claims 1 to 4, wherein
when the configuration information corresponding to the first cell comprises a second parameter used to determine a spatial relationship of the uplink channel, the target reference signal comprises a third reference signal or a reference signal that has a quasi-colocation relationship with the third reference signal, and the third reference signal is a reference signal indicated by the second parameter.

6. The method according to any one of claims 1 to 5, wherein the target reference signal comprises a fourth reference signal or a reference signal that has a quasi-colocation relationship with the fourth reference signal, and the fourth reference signal is a reference signal indicated by transmission configuration indicator information of a control resource set of a current downlink bandwidth.

7. The method according to any one of claims 1 to 6, wherein the target reference signal comprises a fifth reference signal or a reference signal that has a quasi-colocation relationship with the fifth reference signal, and the fifth reference signal is a reference signal used to perform timing synchronization on the first cell.

8. The method according to any one of claims 1 to 7, wherein the target reference signal comprises a sixth reference signal or a reference signal that has a quasi-colocation relationship with the sixth reference signal, and the method further comprises:
when a timing advance value of the first cell is invalid, receiving downlink channel indication information sent by the network device; and
determining, as the sixth reference signal, a reference signal indicated by the downlink channel indication information.

9. A pathloss reference signal determining method, comprising:
sending activation information to a terminal device, wherein the activation information indicates that a first cell is activated, and the first cell is a cell having a data receiving capability of an uplink channel; and
receiving a first message sent by the terminal device, wherein an uplink transmit power of the first message is determined based on a pathloss reference signal, the pathloss reference signal is determined based on a target reference signal, and the target reference signal comprises a reference signal used to reflect a downlink pathloss status corresponding to the terminal device.

10. The method according to claim 9, wherein configuration information corresponding to the first cell does not comprise a first parameter used to perform downlink channel pathloss estimation, and the pathloss reference signal is determined based on the target reference signal.

11. The method according to claim 9 or 10, wherein the target reference signal comprises a first reference signal, a second reference signal, a reference signal that has a quasi-colocation relationship with the first reference signal, or a reference signal that has a quasi-colocation relationship with the second reference signal, the first reference signal is a reference signal corresponding to a layer 3 measurement result reported by the terminal device, and the second reference signal is a reference signal corresponding to a layer 1 measurement result reported by the terminal device.

12. The method according to claim 11, wherein the first cell is a known cell, and the target reference signal comprises the first reference signal or the reference signal that has the quasi-colocation relationship with the first reference signal; or
the first cell is an unknown cell, and the target reference signal comprises the second reference signal or the reference signal that has the quasi-colocation relationship with the second reference signal.

13. The method according to any one of claims 9 to 12, wherein
when the configuration information corresponding to the first cell comprises a second parameter used to determine a spatial relationship of the uplink channel, the target reference signal comprises a third reference signal or a reference signal that has a quasi-colocation relationship with the third reference signal, and the third reference signal is a reference signal indicated by the second parameter.

14. The method according to any one of claims 9 to 13, wherein the target reference signal comprises a fourth reference signal or a reference signal that has a quasi-colocation relationship with the fourth reference signal, and the fourth reference signal is a reference signal indicated by transmission configuration indicator information of a control resource set of a current downlink bandwidth.

15. The method according to any one of claims 9 to 14, wherein the target reference signal comprises a fifth reference signal or a reference signal that has a quasi-colocation relationship with the fifth reference signal, and the fifth reference signal is a reference signal used to perform timing synchronization on the first cell.

16. The method according to any one of claims 9 to 15, wherein the target reference signal comprises a sixth reference signal or a reference signal that has a quasi-colocation relationship with the sixth reference signal, and the method further comprises:
when a timing advance value of the first cell is invalid, sending downlink channel indication information to the terminal device, wherein the sixth reference signal is determined based on a reference signal indicated by the downlink channel indication information.

17. A communication apparatus, comprising a module or unit configured to perform the method according to any one of claims 1 to 8 or claims 9 to 16.

18. A communication apparatus, comprising a processor, wherein
when the processor invokes a computer program or instructions in a memory, the method according to any one of claims 1 to 8 is performed, or the method according to any one of claims 9 to 16 is performed.

19. A communication apparatus, comprising: a logic circuit and a communication interface, wherein
the communication interface is configured to receive information or send information; and
the logic circuit is configured to receive information or send information through the communication interface, so that the method according to any one of claims 1 to 8 is performed, or the method according to any one of claims 9 to 16 is performed.

20. A computer-readable storage medium, wherein
the computer-readable storage medium is configured to store instructions or a computer program; and when the instructions or the computer program is executed, the method according to any one of claims 1 to 8 is implemented, or the method according to any one of claims 9 to 16 is implemented.

21. A computer program product, comprising instructions or a computer program, wherein
when the instructions or the computer program is executed, the method according to any one of claims 1 to 8 is implemented, or the method according to any one of claims 9 to 16 is implemented.

22. A communication system, comprising the communication apparatus according to claim 17, the communication apparatus according to claim 18, or the communication apparatus according to claim 19.

23. A communication system, comprising a terminal device and a network device, wherein
the terminal device is configured to perform the method according to any one of claims 1 to 8, and the network device is configured to perform the method according to any one of claims 9 to 16.
